# EUROPÄISCHE PATENTSCHRIFT

(11) **EP 1 455 310 B1**
(45) Veröffentlichungstag und Bekanntmachung des Hinweises auf die Patenterteilung: **09.07.2014**
(21) Anmeldenummer: 04090093.8
(22) Anmeldetag: 05.03.2004
(51) Int. Cl.: G07B 17/00, G06F 11/14

(54) **Verfahren zum Datenaustausch zwischen Datenverarbeitungseinheiten**
Method for exchanging data between data processing devices
Méthode pour l'échange de données entre des dispositifs de traitement de données

(30) Priorität: 05.03.2003 DE 10309815
(43) Veröffentlichungstag der Anmeldung: 08.09.2004
(73) Patentinhaber: Francotyp-Postalia GmbH, 16547 Birkenwerder (DE)
(72) Erfinder: Bleumer, Gerrit, 16552 Schildow (DE); Clemens, Heinrich, 12161 Berlin (DE)
(74) Vertreter: Karlhuber, Mathias

(56) Entgegenhaltungen:
- EP-A2- 0 689 170
- PETER ROB, CARLOS CORONEL: "Database systems" 1995, BOYD & FRASER PUBLISHING COMPANY , XP007900640 ISBN: 0-7895-0052-3 * Seite 353 - Seite 377 *
- JIM GRAY, ANDREAS REUTER: "Transaction Processing: Concepts and Techniques" 1993, MORGAN KAUFMANN PUBLISHERS , SAN FRANCISCA, CALIFORNIA , XP007900638 ISBN: 1-55860-190-2 * Seite 3 - Seite 43 *
- JIM GRAY, ANDREAS REUTER: "Transaction processing: Concepts and Techniques" 1993, MORGAN KAUFMANN PUBLISHERS , SAN FRANCISCO, CALIFORNIA , XP007900639 ISBN: 1-55850-190-2 * Seite 529 - Seite 577 *

## Beschreibung

Die vorliegende Erfindung betrifft ein Verfahren zum Datenaustausch zwischen einer ersten Datenverarbeitungseinheit, die erste Zustandsinformationen zur ersten Datenverarbeitungseinheit enthält, und einer zweiten Datenverarbeitungseinheit, die zweite Zustandsinformationen zur ersten Datenverarbeitungseinheit enthält. Hierbei werden im Rahmen von Transaktionen zwischen der ersten Datenverarbeitungseinheit und der zweiten Datenverarbeitungseinheit Daten ausgetauscht. Die Transaktionen umfassen zustandsändernde Transaktionen, bei deren erfolgreichem Abschluss die ersten Zustandsinformationen und die zweiten Zustandsinformationen miteinander konsistent verändert werden. Schließlich sind wenigstens zwei unterschiedliche Arten von zustandsändernden Transaktionen vorgesehen. Weiterhin betrifft die vorliegende Erfindung eine entsprechende Anordnung zur Durchführung des Verfahrens.

Derartige Konstellationen mit einer ersten Datenverarbeitungseinheit, die erste Zustandsinformationen über ihren Zustand enthält, und einer zweiten Datenverarbeitungseinheit, die zweite Zustandsinformationen über den Zustand der ersten Datenverarbeitungseinheit enthält, ergeben sich häufig in bestimmten Netzwerken aus derartigen Datenverarbeitungseinheiten. So sind beispielsweise Netzwerke bekannt, bei denen eine Reihe von ersten Datenverarbeitungseinheiten in der Regel unabhängig von einer zentralen zweiten Datenverarbeitungseinheit bestimmte Dienste ausführen bzw. bestimmte Funktionalitäten anbieten, es aber von Zeit zu Zeit erforderlich ist, dass die jeweilige erste Datenverarbeitungseinheit eine Kommunikation mit der zentralen zweiten Datenverarbeitungseinheit durchführt. Im Rahmen einer solchen Kommunikation erfolgt dann häufig durch Abgleich der ersten und zweiten Zustandsinformationen eine zentrale Erfassung der Nutzung der ersten Datenverarbeitungseinheit in der zweiten Datenverarbeitungseinheit.

Im Rahmen einer solchen Kommunikation werden häufig auch Transaktionen durchgeführt, die den Zustand, also auch die ersten Zustandsinformationen der ersten Datenverarbeitungseinheit verändern.

So ist häufig vorgesehen, dass die erste Datenverarbeitungseinheit nach einer bestimmten Nutzungszeit oder nach einem bestimmten Nutzungsintensität, die sich jeweils in den ersten Zustandsinformationen niederschlägt, für weitere Nutzungen gesperrt ist. Um eine solche Nutzungssperrung wieder aufzuheben oder vorab zu verhindern kann eine zustandsändernde Transaktion durchgeführt werden, bei der die ersten Zustandsinformationen derart verändert werden, dass die Nutzung wieder für einen längeren Zeitraum bzw. in einem größeren Umfang möglich ist. Hierbei wird mit anderen Worten eine zustandsändernde Transaktionsart durchgeführt, bei der die Privilegien der ersten Datenverarbeitungseinheit erhöht werden.

Ebenso ist es häufig der Fall, dass Transaktionen anderer Art durchgeführt werden, bei denen die Privilegien der ersten Datenverarbeitungseinheit verringert werden. Insbesondere ist es möglich, dass im Rahmen einer solchen Transaktion die erste Datenverarbeitungseinheit für weitere Nutzungen gesperrt wird, weil in irgendeiner Weise eine Manipulation der Datenverarbeitungseinheit erfasst wurde oder sich der Nutzer der ersten Datenverarbeitungseinheit in Zahlungsverzug für die Nutzung der ersten Datenverarbeitungseinheit befindet.

Als Beispiel für eine derartige Konstellation seien als erste Datenverarbeitungseinheiten hier die entsprechenden Abrechnungseinheiten von Frankiermaschinen genannt, in denen das verfügbare Guthaben gespeichert ist. Um das kontinuierliche Frankieren sicherzustellen, ist von Zeit zu Zeit als erste Transaktionsart das Nachladen von Guthaben aus einer entfernten Datenzentrale als zweiter Datenverarbeitungseinheit erforderlich. Wurde zu viel Guthaben geladen oder soll das geladene Guthaben aus anderen Gründen verringert werden, so ist es bei derartigen Frankiermaschine häufig möglich, im Rahmen einer zweiten Transaktionsart das Guthaben zu verringern.

Die Datenzentrale hält in einer entsprechenden Datenbank für jede registrierte Frankiermaschine Aufzeichnungen über den Zustand der Frankiermaschine, in dem sich diese beim letzten Kontakt befunden hatte. Diese Aufzeichnungen über den Zustand der Frankiermaschine, also die zweiten Zustandsinformationen zur ersten Datenverarbeitungseinheit, werden in der Datenzentrale gehalten, um zu verhindern, dass Betrugsversuche durch Manipulation der ersten Zustandsinformationen, also beispielsweise des geladenen Guthabens der Frankiermaschine, unerkannt bleiben.

Bei jeder zustandsändernden Transaktion besteht allerdings das Problem, dass im Falle eines nicht erfolgreichen Abschlusses der Transaktion, beispielsweise im Falle eines vorzeitigen Abbruchs der Kommunikationsverbindung, unklar ist, ob die ersten Zustandsinformationen und die zweiten Zustandsinformationen in miteinander konsistenter Weise verändert wurden.

Tritt dieser Fall einer erfolglosen zustandsändernden Transaktion ein, muss der Benutzer der Frankiermaschine in der Regel den entsprechenden Vorgang sooft wiederholen, bis ein erfolgreicher Abschluss der Transaktion erreicht wurde. Dies ist ein nicht zufrieden stellender, für den Benutzer der Frankiermaschine in der Regel vergleichsweise zeitaufwändiger Vorgang.

In der US 5,699,415 bzw. der EP 0 689 170 A2 wurde in diesem Zusammenhang vorgeschlagen, im Rahmen einer nachfolgenden Transaktion zwischen der Frankiermaschine und der Datenzentrale eine Überprüfung vorzusehen, die Aufschluss darüber liefert, ob die vorherige Transaktion erfolgreich abgeschlossen wurde oder nicht. Ergibt die Überprüfung, dass die vorherige Transaktion nicht erfolgreich abgeschlossen wurde, wird vorgeschlagen diese Transaktion zu wiederholen, zu stornieren oder zu reparieren. Hierbei besteht jedoch das Problem, dass für den Zeitraum zwischen der nicht erfolgreich abgeschlossenen Transaktion und der nachfolgenden Transaktion unter Umständen ein unzutreffender Zustand der Frankiermaschine in der Datenzentrale registriert ist.

Erfolgte der Abbruch der Transaktion beispielsweise nachdem die zweiten Zustandsinformationen in der Datenzentrale geändert wurden aber bevor die ersten Zustandsinformationen in der Frankiermaschine entsprechend angepasst wurden, so wird bei einem nicht erfolgreich abgeschlossenen Nachladen von Guthaben in der Datenzentrale ein in die Frankiermaschine geladenes Guthaben - also ein Soll für den Benutzer der Frankiermaschine - registriert, welches zu hoch ist, also nicht den Tatsachen entspricht. Mag dies aus Sicht des Betreibers der Datenzentrale unter dem Sicherheitsaspekt akzeptabel sein, ergibt sich jedoch bei derselben Abbruch-Konstellation im Fall einer Rückgabe von Guthaben in den Aufzeichnungen der Datenzentrale ein zu geringes in der Frankiermaschine geladenes Guthaben, also ein Haben für den Benutzer, das ebenfalls nicht den Tatsachen entspricht. Dies ist nun unter Sicherheitsgesichtspunkten aus Sicht des Betreibers der Datenzentrale unerwünscht, da dem Benutzer der Frankiermaschine gegebenenfalls ungerechtfertigt Geld zurückerstattet wird, bevor der Irrtum erkannt wird.

Während bei Frankiermaschinen im Zusammenhang mit der Handhabung von Guthaben eher der Sicherheitsaspekt des Betreibers der Datenzentrale überwiegt, steht bei anderen Transaktionen, wie beispielsweise dem Freigeben der Frankiermaschine zum erstmaligen Frankieren eher die Zufriedenheit des Benutzers im Vordergrund. Hier wäre es unerwünscht, wenn die Frankiermaschine tatsächlich freigeschaltet wurde, in der Datenzentrale aber noch als gesperrt registriert ist, sodass mit der Frankiermaschine erzeugte Frankierungen bei einer auf die Daten der Datenzentrale zurückgreifenden Überprüfung als ungültig eingestuft werden.

Der vorliegenden Erfindung liegt daher die Aufgabe zu Grunde, ein Verfahren sowie eine Anordnung der eingangs genannten Art zur Verfügung zu stellen, welches bzw. welche die oben genannten Nachteile nicht oder zumindest in geringerem Maße aufweist und insbesondere eine unter vorgebbaren Kriterien zuverlässige und sichere Handhabung von nicht erfolgreich abgeschlossenen Transaktionen gewährleistet.

Die vorliegende Erfindung löst diese Aufgabe ausgehend von einem Verfahren gemäß dem Oberbegriff des Anspruchs 1 durch die im kennzeichnenden Teil des Anspruchs 1 angegebenen Merkmale. Sie löst diese Aufgabe weiterhin ausgehend von einer Anordnung gemäß dem Oberbegriff des Anspruchs 15 durch die im kennzeichnenden Teil des Anspruchs 15 angegebenen Merkmale.

Der vorliegenden Erfindung liegt die technische Lehre zu Grunde, dass man eine unter vorgebbaren Kriterien zuverlässige und sichere Handhabung von nicht erfolgreich abgeschlossenen Transaktionen erzielt, wenn bei erfolglosem Abschluss einer zustandsändernden ersten Transaktion die zweiten Zustandsinformationen in Abhängigkeit von der Art der ersten Transaktion gesetzt werden.

Durch das Setzen der zweiten Zustandsinformationen in Abhängigkeit von der Art der erfolglosen Transaktion kann dem mit der jeweiligen Transaktion einhergehenden Kriterium in einfacher Weise optimal Rechnung getragen werden. Das Kriterium, nach dem mit der erfolglos abgeschlossenen Transaktion vorgegangen wird, kann dabei für jede einzelne Transaktion oder Gruppen von Transaktionen beliebig vorgegeben werden. hierbei versteht es sich, dass die ersten oder zweiten Zustandsinformationen nicht notwendigerweise verändert werden müssen. Es sind ebenfalls Konstellationen möglich, in denen sie jeweils unverändert gesetzt bzw. belassen werden.

Es können zum Beispiel je nachdem, in welcher der beiden Datenverarbeitungseinheiten der erfolglose Abschluss der Transaktion erfasst wurde, sowohl die ersten Zustandsinformationen als auch die zweiten Zustandsinformationen in Abhängigkeit von der erfolglosen Transaktion gesetzt werden. Ebenso kann die Wahl, in welcher der beiden Datenverarbeitungseinheiten die Zustandsinformationen in jedem Fall in Abhängigkeit von der Art der Transaktion gesetzt werden müssen, von dem maßgeblichen Kriterium für die jeweilige Transaktion abhängen.

So kann bei Konstellationen, bei denen beispielsweise ein Sicherheitsaspekt für die zweite Datenverarbeitungseinheit überwiegt, vorgesehen sein, dass in jedem Fall die zweiten Zustandsinformationen entsprechend der Art der Transaktion gesetzt werden. Dies ist beispielsweise bei Konstellationen aus Frankiermaschinen als erste Datenverarbeitungseinheiten und einer entfernten Datenzentrale als zweiter Datenverarbeitungseinheit im Zusammenhang mit der Handhabung von Porto der Fall. Sowohl beim Nachladen von Porto in die Frankiermaschine als auch bei der Rückgabe von Porto aus der Frankiermaschine muss sichergestellt sein, dass die zweiten Zustandsinformationen für die jeweilige Frankiermaschine in der Datenzentrale bei erfolglosem Abschluss einer diesbezüglichen Transaktion nach einem vorgegebenen Kriterium behandelt werden.

So kann beispielsweise beim Nachladen von Porto eine progressive Strategie verfolgt werden, d. h. es kann auch bei vorzeitigem Abbruch der entsprechenden Transaktion in der Datenzentrale immer davon ausgegangen werden, dass das Porto auch tatsächlich in die Frankiermaschine geladen wurde. Die zweiten Zustandsinformationen werden in diesem Fall so geändert, als wäre die Transaktion erfolgreich abgeschlossen worden. Stellt sich bei einer nachfolgenden Transaktion heraus, dass dies nicht der Fall ist, kann hierauf dann entsprechend reagiert werden.

Bei der Rückgabe von Porto kann demgegenüber eine defensive Strategie verfolgt werden, d. h. es kann bei vorzeitigem Abbruch der entsprechenden Transaktion in der Datenzentrale immer davon ausgegangen werden, dass das Porto nicht aus der Frankiermaschine abgezogen wurde. Die zweiten Zustandsinformationen werden in diesem Fall unverändert gesetzt, d. h. als hätte die Transaktion nicht stattgefunden. Stellt sich bei einer nachfolgenden Transaktion heraus, dass dies unzutreffend ist, kann auch hier entsprechend reagiert werden.

Es sind jedoch auch Konstellationen möglich, in denen die erste Datenverarbeitungseinheit eine maßgebliche Rolle spielt und demgemäß sichergestellt sein muss, dass in jedem Fall die ersten Zustandsinformationen entsprechend der Art der erfolglos abgeschlossenen Transaktion gesetzt werden. Dies kann insbesondere dann der Fall sein, wenn gerade die erste Datenverarbeitungseinheit durch entsprechend sichere Gestaltung eine zuverlässige Speicherung der ersten Zustandsinformationen gewährleistet, während die zuverlässige Speicherung der zweiten Zustandsinformationen in der zweiten Datenverarbeitungseinheit nicht oder nicht im gleichen Maße sichergestellt ist. Dies kann beispielsweise bei Frankiermaschine der Fall sein, die über ein entsprechendes Sicherheitsmodul als erste Datenverarbeitungseinheit verfügen, während die entfernte Datenzentrale nicht über eine entsprechend sichere zweite Datenverarbeitungseinheit verfügt.

Das erfindungsgemäße Verfahren lässt sich im Zusammenhang mit beliebigen Transaktionsabläufen einsetzen. Erfindungsgemäß ist vorgesehen, dass während der ersten Transaktion die ersten Zustandsinformationen ausgelöst durch eine von der ersten Datenverarbeitungseinheit empfangene Änderungsnachricht der zweiten Datenverarbeitungseinheit verändert werden. Weiterhin werden die zweiten Zustandsinformationen ausgelöst durch eine von der zweiten Datenverarbeitungseinheit empfangene Bestätigungsnachricht der ersten Datenverarbeitungseinheit verändert. Die Bestätigungsnachricht bestätigt dabei die Veränderung der ersten Zustandsinformationen. Bei erfolglosem Abschluss der ersten Transaktion infolge des Ausbleibens einer fehlerfreien Bestätigungsnachricht werden dann die zweiten Zustandsinformationen in Abhängigkeit von der Art der ersten Transaktion gesetzt.

Wird bei einer nachfolgenden Transaktion festgestellt, dass die gemäß der Art der erfolglos abgeschlossenen Transaktion vorgenommene Einstellung der betreffenden Zustandsinformationen unzutreffend war, sollte wie oben erwähnt entsprechend reagiert werden. Hierzu ist es in der Regel erforderlich, dass eine entsprechende Aufzeichnung über vorherige Transaktionen vorhanden ist. Diese Aufzeichnung kann grundsätzlich in beliebiger geeigneter Weise realisiert werden. So kann beispielsweise für jede Transaktion eine entsprechende Aufzeichnung generiert werden.

Bei besonders vorteilhaften Ausgestaltungen des erfindungsgemäßen Verfahrens mit minimiertem Rechenaufwand wird nur im Fall einer erfolglos abgeschlossenen Transaktion eine entsprechende Aufzeichnung generiert.

Vorzugsweise wird bei erfolglosem Abschluss der ersten Transaktion eine erste Transaktionsstatusinformation generiert, die je nach Maßgeblichkeit in der ersten Datenverarbeitungseinheit oder der zweiten Datenverarbeitungseinheit gespeichert wird und von der Art der ersten Transaktion abhängt. Hierbei kann die erste Transaktionsstatusinformation beliebig umfassend sein. Im einfachsten Fall wird jedoch ein vorgegebener Speicher auf einen entsprechenden Wert gesetzt, mit anderen Worten ein für die Art der erfolglos abgeschlossenen Transaktion repräsentatives so genanntes "Flag" gesetzt.

Hierbei kann im Übrigen vorgesehen sein, dass wenigstens die ersten Zustandsinformationen oder wenigstens die zweiten Zustandsinformationen in Abhängigkeit von der ersten Transaktionsstatusinformation gesetzt werden.

Insbesondere im Zusammenhang mit Frankiermaschinen als ersten Datenverarbeitungseinheiten kommt der entfernten Datenzentrale als zweiter Datenverarbeitungseinheit häufig besondere Bedeutung zu. Bei Varianten des erfindungsgemäßen Verfahrens ist daher vorgesehen, dass die erste Transaktionsstatusinformation in der zweiten Datenverarbeitungseinheit gespeichert wird und wenigstens die zweiten Zustandsinformationen in Abhängigkeit von der ersten Transaktionsstatusinformation gesetzt werden.

Wie bereits oben beschrieben ist bei bevorzugten Varianten des erfindungsgemäßen Verfahrens für den Fall eines erfolglosen Abschlusses der ersten Transaktion zur späteren Wiederherstellung der Übereinstimmung zwischen den ersten Zustandsinformationen und den zweiten Zustandsinformationen wenigstens eine defensive Wiederherstellungsstrategie und eine progressive Wiederherstellungsstrategie vorgesehen. Die Wiederherstellungsstrategie wird dabei in Abhängigkeit von der Art der ersten Transaktion ausgewählt.

Im Fall einer von der ersten Datenverarbeitungseinheit ausgehenden Wiederherstellung der Übereinstimmung werden die ersten Zustandsinformationen bei der defensiven Wiederherstellungsstrategie unverändert gesetzt. Bei der progressiven Wiederherstellungsstrategie hingegen werden die ersten Zustandsinformationen wie beim erfolgreichen Abschluss der ersten Transaktion gesetzt.

Im Fall einer von der zweiten Datenverarbeitungseinheit ausgehenden Wiederherstellung der Übereinstimmung werden die zweiten Zustandsinformationen bei der defensiven Wiederherstellungsstrategie unverändert gesetzt. Bei der progressiven Wiederherstellungsstrategie werden hier dann die zweiten Zustandsinformationen bei der progressiven Wiederherstellungsstrategie wie beim erfolgreichen Abschluss der ersten Transaktion gesetzt.

Für den Fall, dass die bei einer erfolglos abgeschlossenen Transaktionen in Abhängigkeit von der Transaktion gewählten Zustandsinformationen nicht zutreffen, sollte wie erwähnt eine spätere Korrektur dieses Zustandes vorgesehen sein. Diese Korrektur kann auf beliebige geeignete Weise sichergestellt werden. So kann beispielsweise eine gesonderte Korrektur-Routine vorgesehen sein, die nach Auftreten einer solchen erfolglos abgeschlossenen Transaktion, bevorzugt automatisch, eine erneute Kommunikation zwischen den Datenverarbeitungseinheiten erzwingt, um eine Korrektur herbeizuführen.

Bei bevorzugten, weil einfach gestalteten Varianten des erfindungsgemäßen Verfahrens ist vorgesehen, dass im Rahmen einer der ersten Transaktion nachfolgenden zweiten Transaktion die ersten Zustandsinformationen und die zweiten Zustandsinformationen verglichen werden. Im Falle einer Inkonsistenz zwischen den ersten Zustandsinformationen und den zweiten Zustandsinformationen werden diese dann zur Wiederherstellung ihrer Übereinstimmung synchronisiert werden. Dabei erfolgt die Synchronisation der ersten Zustandsinformationen und der zweiten Zustandsinformationen in Abhängigkeit von der Art der ersten Transaktion.

Um die Synchronisation in Abhängigkeit von der Art der ersten Transaktion sicherzustellen, können grundsätzlich beliebige geeignete Wege beschritten werden. Bevorzugt findet in diesem Zusammenhang die oben bereits beschriebene erste Transaktionsstatusinformation Anwendung. Hierzu wird bei erfolglosem Abschluss der ersten Transaktion eine von der Art der ersten Transaktion abhängige erste Transaktionsstatusinformation generiert und gespeichert. Die Synchronisation der ersten Zustandsinformationen und der zweiten Zustandsinformationen erfolgt bei der nachfolgenden Transaktion dann in Abhängigkeit von der ersten Transaktionsstatusinformation.

Insbesondere im Zusammenhang mit Frankiermaschinen als ersten Datenverarbeitungseinheiten kommt der entfernten Datenzentrale als zweiter Datenverarbeitungseinheit wie erwähnt häufig besondere Bedeutung zu. Bei bestimmten Weiterbildungen des erfindungsgemäßen Verfahrens wird die erste Transaktionsstatusinformation daher in der zweiten Datenverarbeitungseinheit gespeichert. Die Synchronisation der ersten Zustandsinformationen und der zweiten Zustandsinformationen geht dann von der zweiten Datenverarbeitungseinheit aus.

Um eine Inkonsistenz zwischen den ersten und zweiten Zustandsinformationen effektiv und zuverlässig beheben zu können, ist bei bevorzugten Varianten des erfindungsgemäßen Verfahrens für den Fall eines erfolglosen Abschlusses der ersten Transaktion wenigstens eine defensive Wiederherstellungsstrategie und eine progressive Wiederherstellungsstrategie vorgesehen. Die Wiederherstellungsstrategie wird wiederum in Abhängigkeit von der Art der ersten Transaktion ausgewählt.

Bei einer von der ersten Datenverarbeitungseinheit ausgehenden Synchronisation werden die ersten Zustandsinformationen bei der defensiven Wiederherstellungsstrategie so gesetzt, dass sie den zweiten Zustandsinformationen entsprechen. Bei der progressiven Wiederherstellungsstrategie werden die zweiten Zustandsinformationen demgegenüber so gesetzt, dass sie den ersten Zustandsinformationen entsprechen.

Alternativ werden bei einer von der zweiten Datenverarbeitungseinheit ausgehenden Synchronisation die zweiten Zustandsinformationen bei der defensiven Wiederherstellungsstrategie so gesetzt, dass sie den ersten Zustandsinformationen entsprechen. Bei der progressiven Wiederherstellungsstrategie werden dann die ersten Zustandsinformationen so gesetzt, dass sie den zweiten Zustandsinformationen entsprechen.

Auch hier findet bevorzugt wieder die erste Transaktionsstatusinformation Anwendung. Vorzugsweise ist dabei vorgesehen, dass bei erfolglosem Abschluss der ersten Transaktion eine von der Art der ersten Transaktion abhängige erste Transaktionsstatusinformation generiert und gespeichert wird und die Wiederherstellungsstrategie in Abhängigkeit von der ersten Transaktionsstatusinformation ausgewählt wird.

Auch in diesem Fall wird bei bestimmten Ausgestaltungen des erfindungsgemäßen Verfahren zur Synchronisation wiederum von der zweiten Datenverarbeitungseinheit ausgegangen. Demgemäß wird die erste Transaktionsstatusinformation in der zweiten Datenverarbeitungseinheit gespeichert.

Um eine Integritätsprüfung zweiter Ordnung durchzuführen, ist bei bevorzugten Weiterbildungen des erfindungsgemäßen Verfahrens ein Zustandsmodell vorgesehen, welches zumindest sämtliche möglichen Änderungen der Zustände der ersten Datenverarbeitungseinheit und damit der ersten Zustandsinformationen erfasst. Vorzugsweise erfasst das Zustandsmodell auch sämtliche Bedingungen für den Übergang von einem zustand in einen nachfolgenden Zustand.

Bei der Synchronisation der ersten und zweiten Zustandsinformationen erfolgt dann eine Integritätsprüfung. Bei dieser wird anhand des Zustandsmodells überprüft, ob überhaupt - in einem oder mehreren Schritten - ein Übergang zwischen den in der ersten Datenverarbeitungseinheit gehaltenen ersten Zustandsinformationen und den in der zweiten Datenverarbeitungseinheit gehaltenen zweiten Zustandsinformationen möglich ist, oder ob ein unüberwindbarer Konflikt entstanden ist. Bei Feststellen eines möglichen Überganges zwischen den ersten Zustandsinformationen und den zweiten Zustandsinformationen wird die Synchronisation fortgesetzt. Andernfalls, also bei Feststellen keines möglichen Überganges zwischen den ersten Zustandsinformationen und den zweiten Zustandsinformationen, wird die Synchronisation abgebrochen.

Das erfindungsgemäße Verfahren lässt sich auf beliebige Konstellationen anwenden, bei denen zwischen zwei Datenverarbeitungseinheiten im Rahmen einer Kommunikation Transaktionen durchgeführt werden, welche den Zustand der ersten Datenverarbeitungseinheit verändern. Hierbei kann es sich beispielsweise um Transaktionen handeln, welche die Werte bestimmter Register der ersten Datenverarbeitungseinheit verändern. Ebenso kann es sich um Transaktionen handeln, bei denen zwischen einzelnen Betriebszuständen der ersten Datenverarbeitungseinheit umgeschaltet wird. Bei diesem Betriebszuständen kann es sich beispielsweise um folgende Zustände handeln: einen Initialisierungszustand, in dem die erste Datenverarbeitungseinheit für ihren normalen Betrieb konfiguriert wird, einen Freigabezustand, in dem die erste Datenverarbeitungseinheit normal betrieben werden kann, einen Sperrzustand, in dem die erste Datenverarbeitungseinheit reversibel für den normalen Betrieb gesperrt ist, sowie einen Lebensendezustand, in dem die erste Datenverarbeitungseinheit irreversibel für den Betrieb gesperrt ist.

Besonders vorteilhaft lässt sich die Erfindung wie erwähnt im Zusammenhang mit Konstellationen anwenden, bei denen mehrere erste Datenverarbeitungseinheiten mit wenigstens einer zentralen zweiten Datenverarbeitungseinheit kommunizieren. Insbesondere im Zusammenhang mit Frankiermaschinen kommen die Vorteile der Erfindung besonders gut zum Tragen. Bevorzugt ist die erste Datenverarbeitungseinheit daher das Sicherheitsmodul einer Frankiermaschine.

Insbesondere beim Umgang mit sicherheitsrelevanten Daten versteht es sich, dass die Kommunikation zwischen der ersten Datenverarbeitungseinheit und der zweiten Datenverarbeitungseinheit bevorzugt über eine entsprechend sichere Verbindung erfolgt. Vorzugsweise wird dabei zunächst ein sicherer Kommunikationskanal zwischen den beiden Kommunikationspartnern aufgebaut, den diese dann für die weitere Kommunikation nutzen. Weiter vorzugsweise werden dabei hinlänglich bekannte Verfahren bzw. Protokolle mit starker gegenseitiger Authentifizierung der Kommunikationspartner verwendet. Beispiele hierfür sind das so genannte Secure Socket Layer Protocol (SSL 3.0) oder das so genannte Transport Layer Security Protocol (TLS 1.0).

Es können aber natürlich auch andere Verfahren verwendet werden, die eine ausreichend sichere Kommunikation gewährleisten. Der Grad der Absicherung der Kommunikation richtet sich dabei in der Regel nach der Bedeutung der abzusichernden Daten. Haben diese nur vergleichsweise geringere Sicherheitsrelevanz, so kann eine schwächere Absicherung natürlich absolut ausreichend sein. Bei abrechnungsrelevanten Daten, wie beispielsweise bei den geladenen Portobeträgen von Frankiermaschinen, wird man eine vergleichsweise hohe Sicherheitsstufe für die Kommunikation vorsehen.

Die vorliegende Erfindung betrifft weiterhin eine Anordnung aus einer ersten Datenverarbeitungseinheit und einer mit der ersten Datenverarbeitungseinheit über eine Kommunikationsverbindung verbindbaren zweiten Datenverarbeitungseinheit gemäß Anspruch 15.

Mit einer solchen Anordnung lassen sich die oben im Zusammenhang mit dem erfindungsgemäßen Verfahren beschriebenen Vorteile gleichermaßen realisieren, sodass hier auf die obigen Ausführungen Bezug genommen wird. Insbesondere eignet sich eine solche Anordnung zur Durchführung des erfindungsgemäßen Verfahrens.

Die erste Datenverarbeitungseinheit ist erfindungsgemäß zum Verändern der ersten Zustandsinformationen ausgelöst durch eine im Rahmen der ersten Transaktion empfangene Änderungsnachricht ausgebildet. Die zweite Datenverarbeitungseinheit ist dann so ausgebildet, dass sie ausgelöst durch eine danach empfangene Bestätigungsnachricht die zweiten Zustandsinformationen verändert. Weiterhin ist sie so ausgebildet, dass sie bei erfolglosem Abschluss der ersten Transaktion infolge des Ausbleibens einer fehlerfreien Bestätigungsnachricht die zweiten Zustandsinformationen in Abhängigkeit von der Art der ersten Transaktion setzt. Hierfür kann in der zweiten Datenverarbeitungseinheit beispielsweise ein entsprechender Transaktionsspeicher vorgesehen sein, der bei Ausbleiben einer fehlerfreien Bestätigungsnachricht entsprechend der Art der soeben durchgeführten Transaktion adressiert wird und in dem für jede Transaktionsart eine entsprechende Befehlsfolge zur Behandlung der zweiten Zustandsinformationen abgelegt ist. Dieser Transaktionsspeicher ist bevorzugt frei modifizierbar, sodass beliebige Kriterien für die Behandlung von nicht erfolgreich abgeschlossenen Transaktionen vorgegeben werden können.

Zur Anwendung der oben beschriebenen Transaktionsstatusinformation ist die erste Datenverarbeitungseinheit bevorzugt zum Generieren und Speichern einer ersten Transaktionsstatusinformation bei erfolglosem Abschluss der ersten Transaktion ausgebildet. Dies ist gerade dann der Fall, wenn beispielsweise spätere Synchronisationen von der ersten Datenverarbeitungseinheit ausgehen. Alternativ kann auch die zweite Datenverarbeitungseinheit zum Generieren und Speichern einer ersten Transaktionsstatusinformation bei erfolglosem Abschluss der ersten Transaktion ausgebildet sein. In beiden Fällen hängt die erste Transaktionsstatusinformation von der Art der ersten Transaktion ab.

Bei bevorzugten Weiterbildungen der erfindungsgemäßen Anordnung weist die erste Datenverarbeitungseinheit zur späteren Wiederherstellung der Übereinstimmung zwischen den ersten Zustandsinformationen und den zweiten Zustandsinformationen nach erfolglosem Abschluss der ersten Transaktion wenigstens zwei unterschiedliche Betriebsmodi auf. Bei diesen handelt es sich zum einen um einen defensiven Wiederherstellungsmodus und zum anderen um einen progressiven Wiederherstellungsmodus. Weiterhin ist die erste Datenverarbeitungseinheit zur Auswahl des Wiederherstellungsmodus in Abhängigkeit von der Art der ersten Transaktion ausgebildet. Ist sie in den defensiven Wiederherstellungsmodus geschaltet, setzt die erste Datenverarbeitungseinheit bei erfolglosem Abschluss der ersten Transaktion die ersten Zustandsinformationen unverändert. Ist sie jedoch in den progressiven Wiederherstellungsmodus geschaltet, setzt sie die ersten Zustandsinformationen bei erfolglosem Abschluss der ersten Transaktion so wie beim erfolgreichen Abschluss der ersten Transaktion.

Bei alternativen Varianten der erfindungsgemäßen Anordnung kann die zweite Datenverarbeitungseinheit zur späteren Wiederherstellung der Übereinstimmung in entsprechender Weise ausgebildet sein. Auch sie kann einen defensiven Wiederherstellungsmodus sowie einen progressiven Wiederherstellungsmodus aufweisen, in den sie jeweils in Abhängigkeit von der Art der ersten Transaktion geschaltet wird.

Um die oben beschriebene Synchronisation der ersten und zweiten Zustandsinformationen im Rahmen einer nachfolgenden zweiten Transaktion durchführen zu können, ist bei besonders bevorzugten Weiterbildungen der erfindungsgemäßen Anordnung vorgesehen, dass die erste Datenverarbeitungseinheit und zusätzlich oder alternativ die zweite Datenverarbeitungseinheit zum Vergleichen der ersten Zustandsinformationen und der zweiten Zustandsinformationen im Rahmen der zweiten Transaktion ausgebildet ist. Im Falle einer dabei festgestellten Inkonsistenz wird die Synchronisation der ersten Zustandsinformationen und der zweiten Zustandsinformationen durch die jeweilige Datenverarbeitungseinheit dann in Abhängigkeit von der Art der ersten Transaktion durchgeführt.

Bevorzugt sind die erste Datenverarbeitungseinheit und zusätzlich oder alternativ die zweite Datenverarbeitungseinheit hierbei wiederum zur Verwendung der oben beschriebenen Transaktionsstatusinformation ausgebildet. Diese wird von der betreffenden Datenverarbeitungseinheit abhängig von der Art der ersten Transaktion generiert und gespeichert. Anschließend wird die Synchronisation der Zustandsinformationen in Abhängigkeit von der ersten Transaktionsstatusinformation durchgeführt. Hierzu greift die betreffende Datenverarbeitungseinheit zu Beginn der Synchronisation auf den Speicher mit der zuvor abhängig von der Art der ersten Transaktion gesetzten Speicher zu und verfährt dann bei der Synchronisation in Abhängigkeit von dem hierbei erfassten Speicherwert.

Wie bereits oben beschrieben wurde, weist die zweite Datenverarbeitungseinheit bevorzugt wenigstens einen defensiven Wiederherstellungsmodus und einen progressiven Wiederherstellungsmodus auf. Dabei ist sie bevorzugt zur Auswahl des Wiederherstellungsmodus in Abhängigkeit von der Art der ersten Transaktion und zum Initiieren der Synchronisation ausgebildet. Die erste Datenverarbeitungseinheit und die zweite Datenverarbeitungseinheit sind in diesem Fall so ausgebildet, dass die zweiten Zustandsinformationen im defensiven Wiederherstellungsmodus so gesetzt werden, dass sie den ersten Zustandsinformationen entsprechen. Im progressiven Wiederherstellungsmodus werden die ersten Zustandsinformationen so gesetzt, dass sie den zweiten Zustandsinformationen entsprechen.

Bevorzugt ist die zweite Datenverarbeitungseinheit hierbei wiederum zum Generieren und Speichern einer von der Art der ersten Transaktion abhängigen ersten Transaktionsstatusinformation bei erfolglosem Abschluss der ersten Transaktion und zur Auswahl des Wiederherstellungsmodus in Abhängigkeit von der ersten Transaktionsstatusinformation ausgebildet.

Es versteht sich jedoch, dass die Synchronisation der Zustandsinformationen bei anderen Varianten der erfindungsgemäßen Anordnung auch von der ersten Datenverarbeitungseinheit ausgehen kann und dass diese dann in entsprechender Weise gestaltet sein kann.

Bei bevorzugten Varianten der erfindungsgemäßen Anordnung kommt die oben beschriebene Integritätsprüfung zum Einsatz. Hierzu ist in der ersten Datenverarbeitungseinheit und zusätzlich oder alternativ in der zweiten Datenverarbeitungseinheit ein Zustandmodell gespeichert, in dem sämtliche möglichen Änderungen der Zustandsinformationen zur ersten Datenverarbeitungseinheit erfasst sind. Die betreffende Datenverarbeitungseinheit ist dann zur Durchführung einer Integritätsprüfung bei der Synchronisation derart ausgebildet, dass anhand des Zustandsmodells überprüft wird, ob ein Übergang zwischen den ersten Zustandsinformationen und den zweiten Zustandsinformationen möglich ist. Ist dies der Fall, setzt die betreffende Datenverarbeitungseinheit die fort. Ist dies nicht der Fall, bricht sie die Synchronisation ab.

Die beiden Datenverarbeitungseinheiten können grundsätzlich in beliebiger geeigneter Weise aufgebaut sein. Bei bevorzugten, weil einfach aufgebauten Varianten umfasst die erste Datenverarbeitungseinheit eine mit dem ersten Speicher verbundene erste Verarbeitungseinrichtung und es ist eine mit der ersten Verarbeitungseinrichtung verbundene erste Kommunikationseinrichtung zum Datenaustausch mit der zweiten Datenverarbeitungseinheit vorgesehen. Die zweite Datenverarbeitungseinheit weist dann eine mit dem zweiten Speicher verbundene zweite Verarbeitungseinrichtung und eine mit der zweiten Verarbeitungseinrichtung verbundene zweite Kommunikationseinrichtung zum Datenaustausch mit der ersten Datenverarbeitungseinheit auf.

Hierbei versteht es sich, dass die jeweilige Kommunikationseinrichtung nicht notwendigerweise in der betreffenden Datenverarbeitungseinheit integriert sein muss. So kann auch wenigstens eine der Kommunikationseinrichtungen durch eine mit der jeweiligen Datenverarbeitungseinheit verbundene externe Kommunikationseinheit zur Datenübertragung zur anderen Datenverarbeitungseinheit vorgesehen sein.

Weiterhin versteht es sich, dass für die Datenübertragung zwischen der ersten Datenverarbeitungseinheit und der zweiten Datenverarbeitungseinheit beliebige bekannte Übertragungsarten und -protokolle einzeln oder in Kombination miteinander verwendet werden können.

Weitere bevorzugte Ausgestaltungen der Erfindung ergeben sich aus den Unteransprüchen bzw. der nachstehenden Beschreibung eines bevorzugten Ausführungsbeispiels, welche auf die beigefügten Zeichnungen Bezug nimmt. Es zeigen
- Figur 1: eine schematische Darstellung einer bevorzugten Ausführungsform der erfindungsgemäßen Anordnung zu Durchführung des erfindungsgemäßen Verfahrens;
- Figur 2: eine schematische Darstellung der Kommunikation zwischen der ersten und zweiten Datenverarbeitungseinheit bei der Anordnung aus Figur 1 während einer zustandsändernden Transaktion;
- Figur 3: eine schematische Darstellung der Übergänge der ersten und zweiten Zustandsinformationen bei der Anordnung aus Figur 1 infolge von zustandsändernden Transaktion;
- Figur 4: eine schematische Darstellung der Übergänge der ersten und zweiten Zustandsinformationen bei der Anordnung aus Figur 1 mit einer ersten Transaktion mit progressiver Wiederherstellungsstrategie;
- Figur 5: eine schematische Darstellung der Übergänge der ersten und zweiten Zustandsinformationen bei der Anordnung aus Figur 1 mit einer ersten Transaktion mit defensiver Wiederherstellungsstrategie.

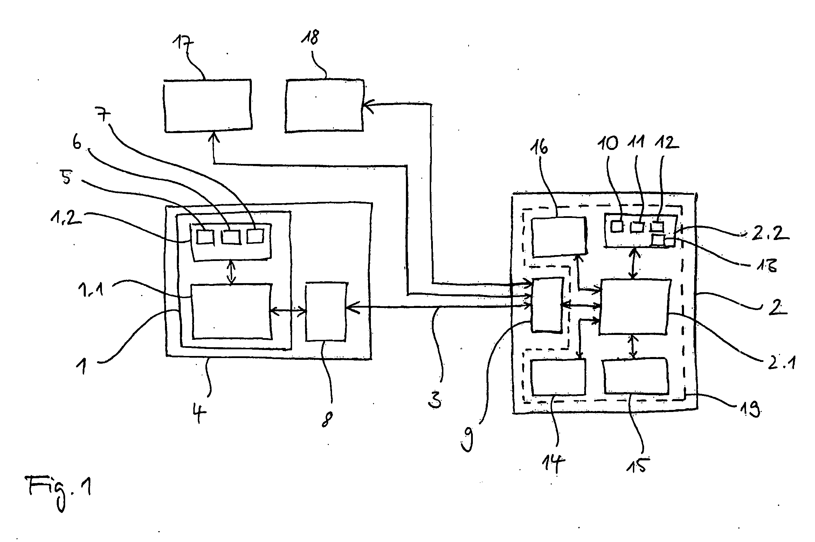

Figur 1 zeigt eine schematische Darstellung einer bevorzugten Ausführungsform der erfindungsgemäßen Anordnung zu Durchführung des erfindungsgemäßen Verfahrens mit einer ersten Datenverarbeitungseinheit 1 und einer zweiten Datenverarbeitungseinheit 2, die über eine Kommunikationsverbindung 3 miteinander kommunizieren können. Bei der ersten Datenverarbeitungseinheit handelt es sich dabei um das Sicherheitsmodul 1 einer Frankiermaschine 4, während die zweite Datenverarbeitungseinheit eine entfernte Datenzentrale 2 ist, die von dem Hersteller der Frankiermaschine 4 betrieben wird.

Das Sicherheitsmodul 1 umfasst eine erste Verarbeitungseinrichtung 1.1 und einen damit verbundenen ersten Speicher 1.2. Das Sicherheitsmodul 1 weist unterschiedliche Betriebszustände auf, wobei in dem ersten Speicher 1.2 erste Zustandsinformationen gespeichert sind, welche den jeweiligen Betriebszustand des Sicherheitsmoduls 1 kennzeichnen. Diese ersten Zustandsinformationen umfassen unter anderem die Registerstände eines aufsteigenden Registers 5 sowie eines absteigenden Registers 6 und den Inhalt eines Sperrspeichers 7. Das aufsteigende Register 5 gibt dabei die Bilanz sämtlicher in die Frankiermaschine 4 geladener und aus der Frankiermaschine 4 zurückgegebener Portobeträge wieder. Das absteigende Register 6 gibt den aktuell für Frankierungen verfügbaren Portobetrag wieder. Der Inhalt des Sperrspeichers 7 reflektiert, ob die Frankiermaschine zum Frankieren freigegeben oder gesperrt ist.

Die erste Verarbeitungseinrichtung 1.1 steuert unter Zugriff auf den ersten Speicher 1.2 den Betrieb des Sicherheitsmoduls 1. Das Sicherheitsmodul 1 nimmt über eine Verbindung mit einer - nicht dargestellten - zentralen Prozessoreinheit der Frankiermaschine 4 wiederum Einfluss auf den Betrieb der Frankiermaschine 4. Die erste Verarbeitungseinrichtung 1.1 ist über eine - nicht dargestellte - Schnittstelle mit einer ersten Kommunikationseinrichtung 8 der Frankiermaschine 4 verbunden. Über diese erste Kommunikationseinrichtung 8 kann das Sicherheitsmodul 1 mit einer zweiten Kommunikationseinrichtung 9 der Datenzentrale 2 verbunden werden.

Die zweite Kommunikationseinrichtung 9 ist mit einer zweiten Verarbeitungseinrichtung 2.1 der Datenzentrale 2 verbunden, welche den Betrieb der Datenzentrale 2 steuert. Die zweite Verarbeitungseinrichtung 2.1 ist mit einem zweiten Speicher 2.2 verbunden, in dem zweite Zustandsinformationen gespeichert sind, welche den aktuellsten in der Datenzentrale 2 vorhandenen Betriebszustand des Sicherheitsmoduls 1 kennzeichnen.

Diese zweiten Zustandsinformationen umfassen zum einen die Registerstände eines aufsteigenden Zentralregisters 10 sowie eines absteigenden Zentralregisters 11 und zum anderen der Inhalt eines Zentralsperrspeichers 12. Das aufsteigende Zentralregister 10 gibt dabei die aktuellsten in der Datenzentrale 2 vorhandenen Stand des aufsteigenden Registers 5 wieder. Das absteigende Zentralregister 11 gibt den aktuellsten in der Datenzentrale 2 vorhandenen Stand des absteigenden Registers 6 wieder. Der Inhalt des Zentralsperrspeichers 12 reflektiert den aktuellsten in der Datenzentrale 2 vorhandenen Zustand des Sperrspeichers 8.

Neben den zweiten Zustandsinformationen ist in dem zweiten Speicher 2.2 noch ein Zentralkreditregister 13 vorgesehen, welches den aktuellen für Portoladevorgänge mit der Frankiermaschine 4 vorhandenen Wert enthält.

Zwischen dem Sicherheitsmodul 1 und der Datenzentrale 2 können über die Kommunikationsverbindung 3 Transaktionen durchgeführt werden, in deren Rahmen Daten zwischen dem Sicherheitsmodul 1 und der Datenzentrale 2 ausgetauscht werden. Diese Transaktionen umfassen unter anderem zustandsändernde Transaktionen, bei deren erfolgreichem Abschluss der jeweilige Betriebszustand des Sicherheitsmoduls 1 und damit die ersten Zustandsinformationen im ersten Speicher 1.2 verändert werden. Dabei sind unterschiedliche Arten zustandsändernder Transaktionen vorgesehen.

Eine erste Art derartiger zustandsändernder Transaktionen ist beispielsweise das Nachladen von Portobeträgen in das Sicherheitsmodul 1 aus der Datenzentrale 2, bei dem sowohl der Wert des aufsteigenden Registers 5 als auch der Wert des absteigenden Registers 6 um den Ladebetrag erhöht wird. Eine zweite Art zustandsändernder Transaktionen ist die Rückgabe von Portobeträgen aus dem Sicherheitsmodul 1 in die Datenzentrale 2, bei der sowohl der Wert des aufsteigenden Registers 5 als auch der Wert des absteigenden Registers 6 um den Rückgabebetrag erniedrigt wird.

Eine dritte Art zustandsändernder Transaktionen ist das Sperren des Sicherheitsmoduls 1 und damit auch der Frankiermaschine 4 durch die Datenzentrale 2, bei dem der Sperrspeicher 8 entsprechend gesetzt wird. Eine vierte Art zustandsändernder Transaktionen ist das Freischalten des Sicherheitsmoduls 1 und damit auch der Frankiermaschine 4 durch die Datenzentrale 2, bei dem wiederum der Sperrspeicher 8 entsprechend gesetzt wird.

Hierbei versteht es sich, dass gegebenenfalls unterschiedliche Arten zustandsändernder Transaktionen in einer einzigen Transaktion durchgeführt werden können. So kann beispielsweise in einer einzigen Transaktion sowohl das Freischalten des Sicherheitsmoduls 1 als auch das Laden von Portobeträgen in das Sicherheitsmodul 1 erfolgen.

Wird eine solche zustandsändernde Transaktion erfolgreich abgeschlossen, werden nicht nur die ersten Zustandsinformationen im Sicherheitsmodul 1 verändert, sondern es werden gegebenenfalls auch die zweiten Zustandsinformationen in der Datenzentrale 2 entsprechend angepasst, sodass die ersten und zweiten Zustandsinformationen miteinander konsistent sind. Nach erfolgreichem Abschluss einer solchen zustandsändernden Transaktion sind die ersten und zweiten Zustandsinformationen mit anderen Worten miteinander synchronisiert.

Eine solche Synchronisation der ersten und zweiten Zustandsinformationen erfolgt im beschriebenen Ausführungsbeispiel im Rahmen von jeglichen Transaktionen zwischen dem Sicherheitsmodul 1 und der Datenzentrale 2. Es versteht sich jedoch, dass die Synchronisation bei anderen Varianten des erfindungsgemäßen Verfahrens bzw. der erfindungsgemäßen Anordnung auch auf bestimmte Arten von Transaktionen, insbesondere auf zustandsändernde Transaktionen, beschränkt sein kann.

Wird eine zustandsändernde erste Transaktion, beispielsweise infolge eines Kommunikationsfehlers zwischen dem Sicherheitsmodul 1 und der Datenzentrale 2 während der ersten Transaktion, nicht erfolgreich abgeschlossen, ist unklar, ob die ersten Zustandsinformationen im Sicherheitsmodul 1 bereits verändert wurden oder nicht. Eine solche nicht erfolgreich abgeschlossene erste Transaktion wird gemäß der Erfindung in der Datenzentrale 2 in Abhängigkeit von der Art der ersten Transaktion behandelt.

Die Art der Behandlung hängt dabei von vorgebbaren Kriterien ab. Während im vorliegenden Beispiel bei der Behandlung von Transaktionen, die sich auf den Transfer von Portobeträgen beziehen, das Sicherheitsbedürfnis des Betreibers der Datenzentrale als maßgebliches Kriterium im Vordergrund steht, kommt es demgegenüber insbesondere beim Freischalten des Sicherheitsmoduls 1 eher auf die Zufriedenheit des Benutzers der Frankiermaschine 4 als maßgebliches Kriterium an.

Um eine nicht erfolgreich abgeschlossene erste Transaktion entsprechend dem für die jeweilige Transaktion maßgeblichen Kriterium behandeln zu können, ist in der Datenzentrale ein Transaktionsspeicher 14 vorgesehen, auf den die zweite Verarbeitungseinrichtung 2.1 im Falle einer nicht erfolgreich abgeschlossenen ersten Transaktion zugreift. In diesem Transaktionsspeicher 14 sind für jede Transaktionsart Vorgabewerte abgelegt. In Abhängigkeit von den Vorgabewerten für die betreffende Transaktionsart der nicht erfolgreich abgeschlossenen ersten Transaktion werden dann die zweiten Zustandsinformationen im zweiten Speicher 2.2 gesetzt.

Da im Falle einer nicht erfolgreich abgeschlossenen ersten Transaktion nicht klar ist, ob die ersten und zweiten Zustandsinformationen miteinander übereinstimmen, erfolgt die Behandlung der nicht erfolgreich abgeschlossenen ersten Transaktion durch die Datenzentrale 2 auch im Hinblick auf eine spätere von der Datenzentrale 2 ausgehende Wiederherstellung dieser Übereinstimmung zwischen den ersten und zweiten Zustandsinformationen.

Je nach Transaktionsart werden beim Setzen der zweiten Zustandsinformationen durch unterschiedliche Betriebsarten der Datenzentrale 2 unterschiedliche Wiederherstellungsstrategien verfolgt.

So ist zum einen ein progressiver Wiederherstellungsmodus der Datenzentrale 2 vorgesehen, mit dem eine progressive Wiederherstellungsstrategie verfolgt wird. Hierbei werden die zweiten Zustandsinformationen so gesetzt, als wäre die erste Transaktion erfolgreich abgeschlossen worden. Die zweiten Zustandsinformationen in der Datenzentrale 2 hinken hierbei mit anderen Worten nie hinter den ersten Zustandsinformationen in dem Sicherheitsmodul 1 her.

Zum anderen ist ein defensive Wiederherstellungsmodus der Datenzentrale 2 vorgesehen, mit dem eine defensive Wiederherstellung Strategie verfolgt wird. Hierbei werden die zweiten Zustandsinformationen unverändert gelassen. In diesem Fall laufen die zweiten Zustandsinformationen in der Datenzentrale 2 mit anderen Worten nie den ersten Zustandsinformationen in dem Sicherheitsmodul 1 voraus.

Die Auswahl des Wiederherstellungsmodus erfolgt auch hier wieder in Abhängigkeit von der Transaktionsart durch die zweite Verarbeitungseinrichtung 2.1, welche hierzu auf den Transaktionsspeicher 14 zugreift.

Im Fall einer nicht erfolgreich abgeschlossenen ersten Transaktion werden die für die betreffende Transaktionsart im Transaktionsspeicher 14 abgelegten Vorgabewerte von der zweiten Verarbeitungseinrichtung 2.1 ausgelesen. Die ausgelesenen Vorgabewerte werden dann von der zweiten Verarbeitungseinrichtung 2.1 zur Erstellung einer ersten Transaktionsstatusinformation verwendet, die in einem mit der zweiten Verarbeitungseinrichtung 2.1 verbundenen Transaktionsstatusinformationsspeicher 15 gespeichert wird. Die erste Transaktionsstatusinformation enthält dabei unter anderem einen Hinweis auf den für die betreffende erste Transaktion vorgesehenen Wiederherstellungsmodus, also über die zu verfolgende Wiederherstellungsstrategie.

Hierbei versteht es sich, dass bei bestimmten Ausgestaltungen der erfindungsgemäßen Anordnung vorgesehen sein kann, dass das Setzen der zweiten Zustandsinformationen im zweiten Speicher 2.2 erfolgen kann, nachdem die erste Transaktionsstatusinformation erzeugt wurde. Ebenso kann hierbei das Setzen der zweiten Zustandsinformationen unter Zugriff auf und in Abhängigkeit von der ersten Transaktionsstatusinformation erfolgen.

Im Rahmen einer nachfolgenden zweiten Transaktion erfolgt eine Synchronisation der ersten und zweiten Zustandsinformationen. Hierbei werden im Rahmen dieser nachfolgenden zweiten Transaktion die ersten Zustandsinformationen an die Datenzentrale 2 übermittelt, mit den zweiten Zustandsinformationen verglichen und es wird im Falle einer Inkonsistenz die Synchronisation durchgeführt.

Die Synchronisation erfolgt dabei in Abhängigkeit von der Art der ersten Transaktion. So greift die zweite Verarbeitungseinrichtung 2.1 bei Feststellung einer solchen Inkonsistenz auf den Transaktionsstatusinformationsspeicher 15 zu, in dem die gemäß der Art der Transaktion erzeugte erste Transaktionsstatusinformation zur vorhergehenden, nicht erfolgreich abgeschlossenen ersten Transaktion gespeichert wurde. Bei der Synchronisation wird dann in Abhängigkeit von dieser ersten Transaktionsstatusinformation vorgegangen, welche wie oben dargelegten einen Hinweis auf den erforderlichen Wiederherstellungsmodus enthält. Die Synchronisation erfolgt mithin also in Abhängigkeit von der Art der ersten Transaktion.

Ist mit der ersten Transaktion gemäß der ersten Transaktionsstatusinformation ein progressiver Wiederherstellungsmodus bzw. eine progressive Wiederherstellungsstrategie verbunden, so werden bei der Synchronisation die ersten Zustandsinformationen im Sicherheitsmodul 1 auf eine entsprechende Nachricht der Datenzentrale 2 hin so gesetzt, dass sie den zweiten Zustandsinformationen in der Datenzentrale 2 entsprechen.

Ist mit der ersten Transaktion gemäß der ersten Transaktionsstatusinformation jedoch ein defensiver Wiederherstellungsmodus bzw. eine defensive Wiederherstellungsstrategie verbunden, so werden bei der Synchronisation die zweiten Zustandsinformationen in der Datenzentrale 2 so gesetzt, dass sie den ersten Zustandsinformationen im Sicherheitsmodul 1 entsprechen.

Im Fall, dass auch eine oder mehrere der ersten Transaktion nachfolgende Transaktionen erfolglos abgeschlossen werden, versteht es sich, dass die erste Transaktionsstatusinformation Informationen hinsichtlich jeder dieser erfolglos abgeschlossenen Transaktionen enthält, sodass bei der Wiederherstellung der Übereinstimmung zwischen den ersten und zweiten Zustandsinformationen sämtliche nacheinander erfolglos abgeschlossenen Transaktionen berücksichtigt werden können.

Im Rahmen der Synchronisation erfolgt noch eine Integritätsprüfung in der Datenzentrale 2. Hierzu ist in einem Zustandsmodellspeicher 16 ein Zustandsmodell für das Sicherheitsmodul 1 vorgesehen, welches sämtliche möglichen Änderungen der Zustände des Sicherheitsmoduls 1 und damit der ersten Zustandsinformationen sowie sämtliche Bedingungen für den Übergang von einem Zustand in einen nachfolgenden Zustand enthalt.

Bei der Integritätsprüfung überprüft die zweite Verarbeitungseinrichtung 2.1 unter Zugriff auf das Zustandsmodell des Zustandsmodellspeichers 16, ob überhaupt - in einem oder mehreren Schritten - ein Übergang zwischen den im Sicherheitsmodul 1 gehaltenen ersten Zustandsinformationen und den in der Datenzentrale 2 gehaltenen zweiten Zustandsinformationen möglich ist, oder ob ein unüberwindbarer Konflikt entstanden ist. Bei Feststellen eines möglichen Überganges zwischen den ersten Zustandsinformationen und den zweiten Zustandsinformationen wird die Synchronisation in der beschriebenen Weise fortgesetzt. Andernfalls, also bei Feststellen keines möglichen Überganges zwischen den ersten Zustandsinformationen und den zweiten Zustandsinformationen, wird die Synchronisation durch die zweite Verarbeitungseinrichtung 2.1 abgebrochen.

Für den Fall eines unüberwindbaren Konflikts kann vorgesehen sein, dass die zweite Transaktion fortgesetzt wird, wobei die zweite Transaktion durch die Datenzentrale 2 unabhängig von der Art der zweiten Transaktion in eine Transaktion umgewandelt wird, mit der das Sicherheitsmodul 1 und damit die Frankiermaschine 4 für die weitere Benutzung gesperrt wird.

Neben der Frankiermaschine 4 können mit der Datenzentrale 2 noch weitere Frankiermaschinen 17 und 18 verbunden werden. Die Transaktionen zwischen der Datenzentrale 2 und diesen weiteren Frankiermaschine und 17 und 18 und die Behandlung nicht erfolgreich abgeschlossener Transaktionen laufen dabei in derselben Weise wie oben beschrieben ab. Für jede Frankiermaschine ist zumindest ein gesonderter zweiter Speicher, ein gesonderter Transaktionsstatusinformationsspeicher sowie ein gesonderter Zustandsmodellspeicher vorgesehen sein. Es versteht sich hierbei jedoch, dass diese gesonderten Speicher nicht als gesonderter Speichermodule vorgesehen sein müssen, sondern als entsprechend definierte Speicherbereiche eines einzigen entsprechend dimensionierten Speichermoduls ausgebildet sein können.

Um die Sicherheit der Daten in der Datenzentrale zu gewährleisten, ist vorgesehen, dass zumindest die zweite Verarbeitungseinrichtung 2.1 und der zweite Speicher 2.2 in einer entsprechend sicheren Umgebung 19 mit entsprechender Zugangskontrolle angeordnet sind. Diese sichere Umgebung 19 kann zum einen physisch durch entsprechend sichere Gehäuse und zusätzlich logisch durch entsprechend abgesicherte Kommunikationsverbindungen hergestellt werden. Im gezeigten Beispiel sind auch der Transaktionsspeicher 14, der Transaktionsstatusinformationsspeicher 15 und der Zustandsmodellspeicher 16 in der sicheren Umgebung 19 angeordnet. Die sichere Umgebung 19 kann beispielsweise durch ein einziges sicheres Hardwaremodul hergestellt werden, welches sämtliche genannte Komponenten enthält.

Fehlen der Datenzentrale derartige Mittel, welche die Manipulationssicherheit der Daten, insbesondere der zweiten Zustandsinformationen, in ausreichender Weise sicherstellen, kann bei anderen Varianten der Erfindung vorgesehen sein, dass sowohl die Synchronisation als auch die Festlegung der Wiederherstellungsstrategie nicht wie oben beschrieben von der Datenzentrale ausgehen, sondern dezentral von dem jeweiligen Sicherheitsmodul der jeweiligen Frankiermaschine. In diesem Fall werden die oben beschriebenen Rollen von Sicherheitsmodul und Datenzentrale lediglich vertauscht. Das Sicherheitsmodul weist dann die Komponenten Transaktionsspeicher, Transaktionsstatusinformationsspeicher und Zustandsmodellspeicher auf und führt dann die erforderlichen Operationen bei der Synchronisation und der Auswahl der Wiederherstellungsstrategie durch.

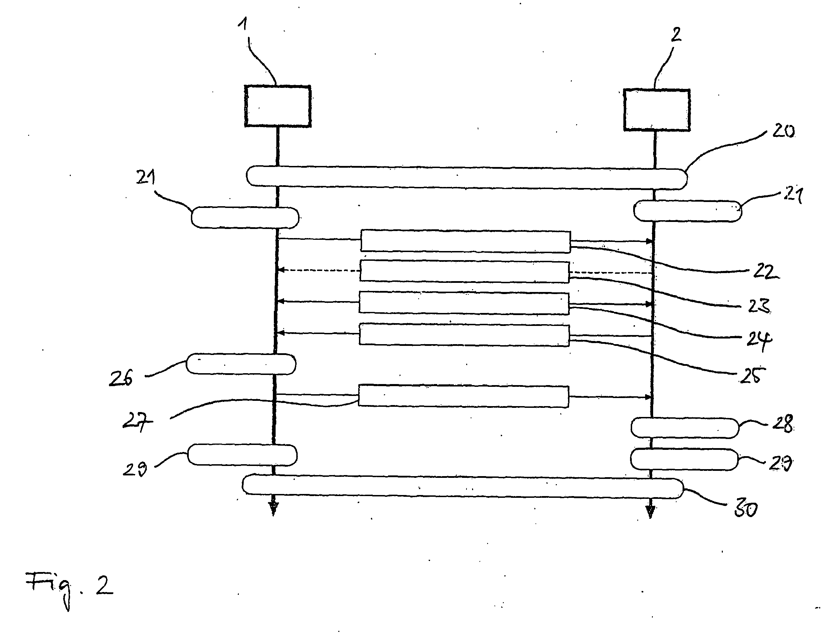

Figur 2 zeigt eine schematische Darstellung der Kommunikation zwischen dem Sicherheitsmodul 1 und der Datenzentrale 2 aus Figur 1 während einer zustandsändernden Transaktion.

Dabei wird zunächst in einem Vorabschritt 20 ein sicherer Kommunikationskanal zwischen dem Sicherheitsmodul 1 und der Datenzentrale 2 aufgebaut. Der sichere Kommunikationskanal kann in beliebiger bekannter Weise hergestellt werden. Im vorliegenden Fall erfolgt dies über eine starke wechselseitige Authentifizierung zwischen dem Sicherheitsmodul 1 und der Datenzentrale 2, wobei im vorliegenden Beispiel das so genannte Secure Socket Layer Protocol (SSL 3.0) Anwendung findet.

In einem ersten Schritt 21 beginnt die Transaktion im Sicherheitsmodul 1 und in der Datenzentrale 2. Hierbei laufen gegebenenfalls entsprechende Initialisierungsroutinen oder dergleichen in dem jeweiligen Kommunikationspartner ab.

In einem zweiten Schritt 22 werden die ersten Zustandsinformationen von dem Sicherheitsmodul 1 zur Datenzentrale 2 übertragen. Die Datenzentrale 2 überprüft hierauf in der oben beschriebenen Weise, ob die ersten und zweiten Zustandsinformationen miteinander konsistent sind. Ist dies nicht der Fall, erfolgt die oben beschriebene Synchronisation.

Ist im Rahmen der Synchronisation eine Anpassung der ersten Zustandsinformationen erforderlich, wird in einem dritten Schritt 23 eine entsprechende Synchronisationsnachricht von der Datenzentrale 2 an das Sicherheitsmodul 1 gesandt. Das Sicherheitsmodul 1 nimmt dann, ausgelöst durch diese Synchronisationsnachricht, die Anpassung der ersten Zustandsinformationen vor.

In einem vierten Schritt 24 werden Dienstdaten zwischen dem Sicherheitsmodul 1 und der Datenzentrale 2 ausgetauscht. Hierbei kann auch eine Anforderung des Sicherheitsmoduls 1 an die Datenzentrale 2 übermittelt werden, mit der eine Zustandsänderung angefordert wird. Beispielsweise kann ein bestimmter Portobetrag zum Nachladen ins Sicherheitsmodul 1 angefordert werden.

In einem fünften Schritt 25 wird eine Änderungsnachricht von der Datenzentrale 2 an das Sicherheitsmodul 1 gesandt, mit der das Sicherheitsmodul 1 zur Änderung seines Zustands und damit der ersten Zustandsinformationen veranlasst wird. Diese Änderungsnachricht kann beispielsweise in der Datenzentrale 2 ausgelöst durch die oben beschriebene Anforderung des Sicherheitsmoduls 1 generiert werden und einen zu ladenden Portobetrag enthalten.

Die Änderungsnachricht kann zusätzlich oder alternativ auch ohne spezielle Anforderung durch das Sicherheitsmodul 1 in der Datenzentrale 2 generiert werden. So kann beispielsweise eine entsprechende Änderungsnachricht generiert werden, wenn in der Datenzentrale 2 oder an anderer Stelle eine Manipulation am Sicherheitsmodul 1 detektiert wurde und dieses nunmehr gesperrt werden soll.

In einem sechsten Schritt 26 erfolgt dann ausgelöst durch die Änderungsnachricht der Datenzentrale 2 die Änderung der ersten Zustandsinformationen im Sicherheitsmodul 1.

In einem siebten Schritt 27 wird eine von dem Sicherheitsmodul 1 generierte Bestätigungsnachricht an die Datenzentrale 2 übersandt, welche diese Änderung der ersten Zustandsinformationen bestätigt.

In einem achten Schritt 28 werden in der Datenzentrale 2 ausgelöst durch die Bestätigungsnachricht des Sicherheitsmoduls 1 die zweiten Zustandsinformationen so verändert, dass sie konsistent mit den geänderten ersten Zustandsinformationen sind. Damit ist die Transaktion erfolgreich abgeschlossen und sie wird in einem neunten Schritt 29 im Sicherheitsmodul 1 und in der Datenzentrale 2 beendet, bevor der sichere Kommunikationskanal in einem zehnten Schritt 30 geschlossen wird.

Das Kommunikationsprotokoll zwischen dem Sicherheitsmodul 1 und der Datenzentrale 2 ist dabei so gestaltet, dass mit der nächsten Nachricht an den Kommunikationspartner jeweils eine positive Bestätigung für den korrekten Empfang der vorher von diesen Kommunikationspartner empfangenen Nachricht übermittelt wird. Wurde keine fehlerfreie Nachricht erhalten, wird dies dem Kommunikationspartner durch eine entsprechende negative Bestätigung mitgeteilt, sodass dieser seine Nachricht wiederholen kann.

Wird in der Datenzentrale 2 nach dem Aussenden der Änderungsnachricht gegebenenfalls nach einer vorgegebenen Anzahl von Versuchen keine oder keine fehlerfreie Bestätigungsnachricht empfangen, liegt eine nicht erfolgreich abgeschlossener Transaktion vor, die in der Datenzentrale 2 in der oben beschriebenen Weise in Abhängigkeit von der Art der Transaktion behandelt wird.

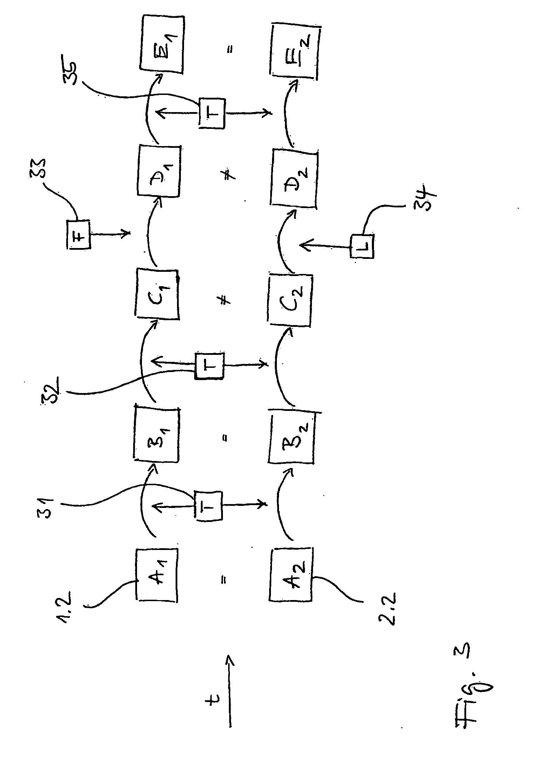

Figur 3 zeigt einen schematischen Zeitablauf (entlang einer Zeitachse t) der Übergänge der ersten und zweiten Zustandsinformationen in dem ersten Speicher 1.2 und dem zweiten Speicher aus Figur 1 infolge von zustandsändernden Transaktion.

Zu einem ersten Zeitpunkt, beispielsweise unmittelbar nach der Initialisierung der Frankiermaschine 4, sind die ersten Zustandsinformationen A₁ in dem ersten Speicher 1.2 und die zweiten Zustandsinformationen A₂ in dem zweiten Speicher 2.2 gleich (A₁=A₂).

Zu einem zweiten Zeitpunkt wird eine zustandsändernde Transaktion 31, beispielsweise die Freischaltung der Frankiermaschine 4 und das Laden eines bestimmten ersten Portobetrages, erfolgreich abgeschlossen. Unmittelbar nach Abschluss dieser Transaktion 31 sind die ersten Zustandsinformationen B₁ in dem ersten Speicher 1.2 und die zweiten Zustandsinformationen B₂ in dem zweiten Speicher 2.2 gleich (B₁=B₂).

Eine weitere zustandsändernde Transaktion 32, beispielsweise das Nachladen eines weiteren Portobetrages, wird zu einem dritten Zeitpunkt infolge eines Kommunikationsfehlers beim Senden der Änderungsnachricht durch die Datenzentrale 2 nicht erfolgreich abgeschlossen. Dabei bleiben die ersten Zustandsinformationen unverändert, während die zweiten Zustandsinformationen aufgrund einer mit dieser Transaktion verbundenen progressiven Wiederherstellungsstrategie so verändert werden, als wäre die Transaktion 32 erfolgreich abgeschlossen worden. Nunmehr sind die ersten Zustandsinformationen C₁ in dem ersten Speicher 1.2 und die zweiten Zustandsinformationen C₂ in dem zweiten Speicher 2.2 ungleich (C₁≠C₂). Die ersten und zweiten Zustandsinformationen befinden sich somit in einem unsynchronisierten Zustand.

Durch lokale Zustandsänderungen 33 im Bereich der Frankiermaschine 4, beispielsweise das Frankieren F mit der Frankiermaschine 4, und durch entfernte Einflussnahmen 34, wird die Abweichung zwischen den ersten und zweiten Zustandsinformationen noch weiter erhöht. Bei der entfernten Einflussnahme 34 kann es sich beispielsweise um die Sperrung L der Frankiermaschine im Fall einer im Datenzentrum 2 oder anderweitig erfassten Manipulation der Frankiermaschine 4 handeln, die über eine Veränderung der zweiten Zustandsinformationen erreicht wird. Diese Veränderung wird bei der nächsten Transaktion in die ersten Zustandsinformationen eingebracht und führt dann zur Sperrung der Frankiermaschine 4. Zu einem vierten Zeitpunkt sind die ersten Zustandsinformationen D₁ in dem ersten Speicher 1.2 und die zweiten Zustandsinformationen D₂ in dem zweiten Speicher 2.2 somit weiterhin ungleich (D₁≠D₂). Die ersten und zweiten Zustandsinformationen befinden sich weiterhin in einem unsynchronisierten Zustand.

Zu einem fünften Zeitpunkt wird eine Transaktion 35 erfolgreich abgeschlossen. Es kommt hierbei zu der beschriebenen Synchronisation der ersten und zweiten Zustandsinformationen, sodass die ersten Zustandsinformationen E₁ in dem ersten Speicher 1.2 und die zweiten Zustandsinformationen E₂ in dem zweiten Speicher 2.2 wieder gleich sind (E₁=E₂). Die ersten und zweiten Zustandsinformationen befinden sich wieder in einem synchronisierten Zustand.

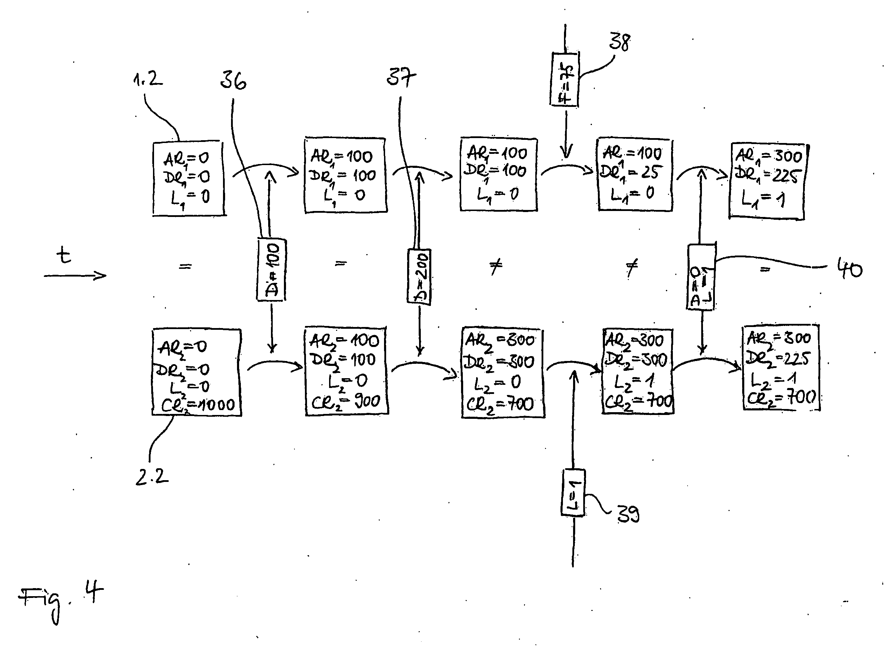

Figur 4 zeigt an einem konkreten Zahlenbeispiel einen schematischen Zeitablauf (entlang einer Zeitachse t) der Übergänge der ersten und zweiten Zustandsinformationen bei der Anordnung aus Figur 1 mit einer ersten Transaktion mit progressiver Wiederherstellungsstrategie.

Zu einem ersten Zeitpunkt unmittelbar nach der Initialisierung und Freischaltung der Frankiermaschine 4, gilt für die ersten Zustandsinformationen AR₁ (aufsteigendes Register 5), DR₁ (absteigendes Register 6), L₁ (Sperrspeicher 7) in dem ersten Speicher 1.2 und die zweiten Zustandsinformationen AR₂ (aufsteigendes Zentralregister 10), DR₂ (absteigendes Zentralregister 11), L₁ (Zentralsperrspeicher 12) und CR₂ (Zentralkreditregister 13) in dem zweiten Speicher 2.2:

| | | |
|---|---|---|
| AR₁ = 0 | = | AR₂ = 0 |
| DR₁ = 0 | = | DR₂= 0 |
| L₁ =0 | = | L₂ = 0 |
| | | CR₂= 1000 |

Zu einem zweiten Zeitpunkt wird eine zustandsändernde Transaktion 36, nämlich das Laden eines ersten Portobetrages D = 100, erfolgreich abgeschlossen. Unmittelbar nach Abschluss dieser Transaktion 36 gilt für die ersten Zustandsinformationen in dem ersten Speicher 1.2 und die zweiten Zustandsinformationen in dem zweiten Speicher 2.2:

| | | |
|---|---|---|
| AR₁ = 100 | = | AR₂= 100 |
| DR₁ = 100 | = | DR₂= 100 |
| L₁ =0 | = | L₂ = 0 |
| | | CR₂= 900 |

Eine weitere zustandsändernde Transaktion 37 in Form des Nachladens eines weiteren Portobetrages D = 200 wird zu einem dritten Zeitpunkt infolge eines Kommunikationsfehlers beim Senden der Änderungsnachricht durch die Datenzentrale 2 nicht erfolgreich abgeschlossen. Dabei bleiben die ersten Zustandsinformationen unverändert, während die zweiten Zustandsinformationen aufgrund einer mit dieser Transaktion verbundenen progressiven Wiederherstellungsstrategie so verändert werden, als wäre die Transaktion 37 erfolgreich abgeschlossen worden. Nunmehr gilt für die ersten und zweiten Zustandsinformationen:

| | | |
|---|---|---|
| AR₁ = 100 | ≠ | AR₂ = 300 |
| DR₁ = 100 | ≠ | DR₂= 300 |
| L₁ =0 | = | L₂ =0 |
| | | CR₂= 700 |

Die ersten und zweiten Zustandsinformationen befinden sich somit in einem unsynchronisierten Zustand.

Durch lokale Zustandsänderungen 38 im Bereich der Frankiermaschine 4 infolge des Frankierens mit dem Gesamtfrankierwert F = 75 mit der Frankiermaschine 4 wird die Abweichung zwischen den ersten und zweiten Zustandsinformationen noch weiter erhöht. Weiterhin werden bei der Überprüfung der mit der Frankiermaschine 4 erzeugten Frankierabdrucke Unregelmäßigkeiten festgestellt, sodass die Frankiermaschine 4 beim nächsten Kontakt mit der Datenzentrale vorübergehend gesperrt werden soll. Hierzu wird zunächst durch eine entfernte Einflussnahme 39 im Bereich der Datenzentrale 2 der Zentralsperrspeicher auf L = 1 gesetzt. Zu einem vierten Zeitpunkt gilt für die ersten Zustandsinformationen in dem ersten Speicher 1.2 und die zweiten Zustandsinformationen in dem zweiten Speicher 2.2 somit:

| | | |
|---|---|---|
| AR₁ = 100 | ≠ | AR₂ = 300 |
| DR₁ = 25 | ≠ | DR₂= 300 |
| L₁ = 0 | ≠ | L₂ = 1 |
| | | CR₂= 700 |

Die ersten und zweiten Zustandsinformationen befinden sich weiterhin in einem unsynchronisierten Zustand.

Zu einem fünften Zeitpunkt wird eine Transaktion 40 erfolgreich abgeschlossen, mit der die Frankiermaschine 4 gesperrt wird. Es kommt hierbei zunächst zu der beschriebenen Synchronisation der ersten und zweiten Zustandsinformationen. Dabei werden gemäß der mit der vorhergehenden Transaktion 37 einhergehenden progressiven Wiederherstellungsstrategie die Teile (AR₁, DR₁) der ersten Zustandsinformationen, die während der Transaktion 37 geändert werden sollten, so gesetzt, dass sie mit den während der Transaktion 37 geänderten Teilen (AR₂, DR₂) der zweiten Zustandsinformationen übereinstimmen. Anschließend wird im Rahmen der Transaktion 40 noch der Sperrspeicher L₁ gesetzt. Die ersten und zweiten Zustandsinformationen befinden sich dann wieder in einem synchronisierten Zustand:

| | | |
|---|---|---|
| AR₁ = 300 | = | AR₂ = 300 |
| DR₁ = 225 | = | DR₂= 225 |
| L₁ = 1 | = | L₂ = 1 |
| | | CR₂ = 700 |

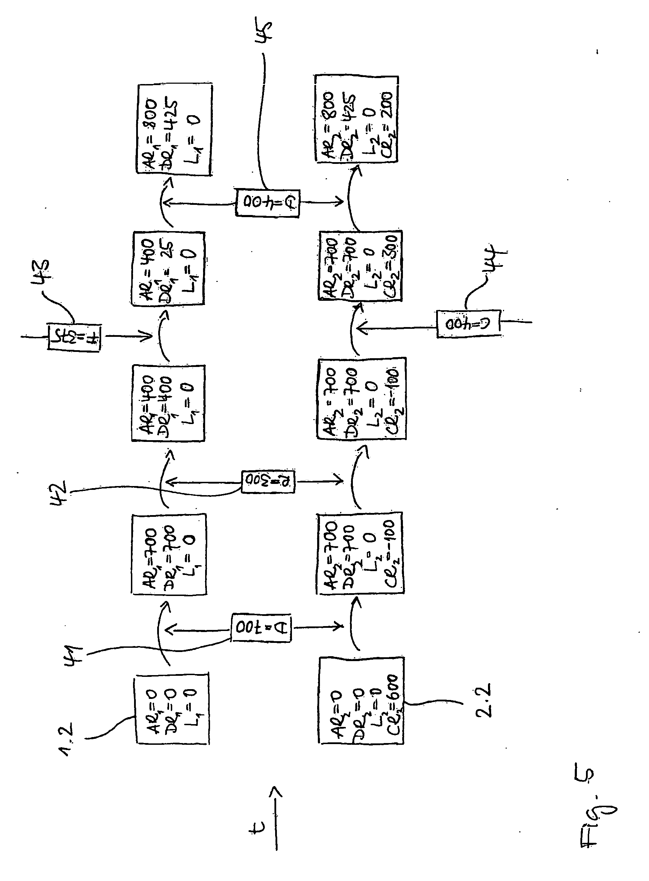

Figur 5 zeigt an einem weiteren konkreten Zahlenbeispiel einen schematischen Zeitablauf (entlang einer Zeitachse t) der Übergänge der ersten und zweiten Zustandsinformationen bei der Anordnung aus Figur 1 mit einer ersten Transaktion mit defensiver Wiederherstellungsstrategie.

Zu einem ersten Zeitpunkt unmittelbar nach der Initialisierung und Freischaltung der Frankiermaschine 4, gilt für die ersten Zustandsinformationen AR₁ (aufsteigendes Register 5), DR₁ (absteigendes Register 6), L₁ (Sperrspeicher 7) in dem ersten Speicher 1.2 und die zweiten Zustandsinformationen AR₂ (aufsteigendes Zentralregister 10), DR₂ (absteigendes Zentralregister 11), L₁ (Zentralsperrspeicher 12) und CR₂ (Zentralkreditregister 13) in dem zweiten Speicher 2.2:

| | | |
|---|---|---|
| AR₁ = 0 | = | AR₂ = 0 |
| DR₁ = 0 | = | DR₂ = 0 |
| L₁ = 0 | = | L₂ = 0 |
| | | CR₂= 600 |

Zu einem zweiten Zeitpunkt wird eine zustandsändernde Transaktion 41 erfolgreich abgeschlossen. Mit dieser Transaktion 41 wird irrtümlich ein zu hoher erster Portobetrag D = 700 geladen, wobei sein Konto (siehe CR₂) in der Datenzentrale 2 innerhalb seines Kreditrahmens überzogen wird. Unmittelbar nach Abschluss dieser Transaktion 41 gilt für die ersten Zustandsinformationen in dem ersten Speicher 1.2 und die zweiten Zustandsinformationen in dem zweiten Speicher 2.2:

| | | |
|---|---|---|
| AR₁ = 700 | = | AR₂ = 700 |
| DR₁ = 700 | = | DR₂= 700 |
| L₁ =0 | = | L₂ = 0 |
| | | CR₂= -100 |

Da der Benutzer der Frankiermaschine 4 seinen Irrtum bemerkt hat, soll in einer weiteren zustandsändernden Transaktion 42 ein Portobetrag R = 300 zu einem dritten Zeitpunkt wider an die Datenzentrale zurückgegeben werden. Infolge eines Kommunikationsfehlers beim Empfang der Bestätigungsnachricht durch die Datenzentrale 2 wird die Transaktion 42 nicht erfolgreich abgeschlossen. Dabei werden die ersten Zustandsinformationen verändert, während die zweiten Zustandsinformationen aufgrund einer mit dieser Transaktion verbundenen defensiven Wiederherstellungsstrategie unverändert belassen werden. Nunmehr gilt für die ersten Zustandsinformationen und die zweiten Zustandsinformationen:

| | | |
|---|---|---|
| AR₁ = 400 | ≠ | AR₂ = 700 |
| DR₁ = 400 | ≠ | DR₂= 700 |
| L₁ = 0 | = | L₂ = 0 |
| | | CR₂= -100 |

Die ersten und zweiten Zustandsinformationen befinden sich somit in einem unsynchronisierten Zustand.

Durch lokale Zustandsänderungen 43 im Bereich der Frankiermaschine 4 infolge des Frankierens mit dem Gesamtfrankierwert F = 375 mit der Frankiermaschine 4 wird die Abweichung zwischen den ersten und zweiten Zustandsinformationen noch weiter erhöht. Weiterhin wird durch eine Überweisung C = 400 des Benutzers Zentralkreditregister 13 durch eine entfernte Einflussnahme 44 im Bereich der Datenzentrale 2 erhöht. Zu einem vierten Zeitpunkt gilt für die ersten und die zweiten Zustandsinformationen somit:

| | | |
|---|---|---|
| AR₁ = 400 | ≠ | AR₂ = 700 |
| DR₁ = 25 | ≠ | DR₂= 700 |
| L₁ = 0 | = | L₂ = 0 |
| | | CR₂= 300 |

Die ersten und zweiten Zustandsinformationen befinden sich also weiterhin in einem unsynchronisierten Zustand.

Zu einem fünften Zeitpunkt wird eine Transaktion 45 erfolgreich abgeschlossen, mit der ein Portobetrag D = 400 in die Frankiermaschine 4 geladen wird. Es kommt hierbei zunächst zu der beschriebenen Synchronisation der ersten und zweiten Zustandsinformationen. Dabei werden gemäß der mit der vorhergehenden Transaktion 42 einhergehenden defensiven Wiederherstellungsstrategie die Teile (AR₂, DR₂) der zweiten Zustandsinformationen, die während der Transaktion 42 geändert werden sollten, so gesetzt, dass sie mit den während der Transaktion 42 geänderten Teilen (AR₁, DR₁) der ersten Zustandsinformationen übereinstimmen. Anschließend wird im Rahmen der Transaktion 45 noch die Teile (AR₁, DR₁, AR₂, DR₂) der ersten und zweiten Zustandsinformationen gemäßen dem Ladebetrag gesetzt. Die ersten und zweiten Zustandsinformationen befinden sich dann wieder in einem synchronisierten Zustand:

| | | |
|---|---|---|
| AR₁ = 800 | = | AR₂ = 800 |
| DR₁ = 425 | = | DR₂= 425 |
| L₁ =0 | = | L₂ =0 |
| | | CR₂= 200 |

Die vorliegende Erfindung wurde vorstehend ausschließlich anhand von Bespielen im Bereich der Frankiermaschinen beschrieben. Es versteht sich jedoch, dass die Erfindung auch in Zusammenhang mit beliebigen anderen ersten Datenverarbeitungseinheiten verwendet werden kann, deren Zustand durch zustandsändernde Transaktionen mit einer zweiten Datenverarbeitungseinheit modifiziert werden kann.

## Patentansprüche

1. Verfahren zum Datenaustausch zwischen einer ersten Datenverarbeitungseinheit (1), die erste Zustandsinformationen zur ersten Datenverarbeitungseinheit (1) enthält und einer zweiten Datenverarbeitungseinheit (2) die zweite Zustandsinformationen zur ersten Datenverarbeitungseinheit (1) enthält bei dem
- im Rahmen von Transaktionen zwischen der ersten Datenverarbeitungseinheit (1) und der zweiten Datenverarbeitungseinheit (2) Daten ausgetauscht werden.
- die Transaktionen zustandsändernde Transaktionen umfassen bei deren erfolgreichem Abschluss die ersten Zustandsinformationen und die zweiten Zustandsinformationen miteinander konsistent verändert werden, und
- wenigstens zwei unterschiedliche Arten von zustandsändernden Transaktionen vorgesehen sind,
**dadurch gekennzeichnet dass**
- eine zustandsändernde erste Transaktion durchgeführt wird und bei erfolglosem Abschluss der ersten Transaktion die zweiten Zustandsinformationen in Abhängigkeit von der Art der ersten Transaktion gesetzt werden wobei
- die ersten Zustandsinformationen ausgelöst durch eine von der ersten Datenverarbeitungseinheit (1) empfangene Änderungsnachricht der zweiten Datenverarbeitungseinheit (2) verändert werden,
- die zweiten Zustandsinformationen ausgelöst durch eine von der zweiten Datenverarbeitungseinheit (1) empfangene Bestätigungsnachricht der ersten Datenverarbeitungseinheit (1) verändert werden wobei die Bestätigungsnachricht die Veränderung der ersten Zustandsinformationen bestätigt und
- für eine der unterschiedlichen Arten von zustandsändernden Transaktionen bei erfolglosem Abschluss der ersten Transaktion infolge des Ausbleibens einer fehlerfreien Bestätigungsnachricht die zweiten Zustandsinformationen durch die zweite Datenverarbeitungseinheit (2) in Abhängigkeit von der Art der ersten Transaktion so gesetzt werden als wäre die erste Transaktion erfolgreich abgeschlossen.

2. Verfahren nach Anspruch 1, **dadurch gekennzeichnet dass** bei erfolglosem Abschluss der ersten Transaktion eine erste Transaktionsstatusinformation generiert wird die in der ersten Datenverarbeitungseinheit (1) oder der zweiten Datenverarbeitungseinheit (2) gespeichert wird, wobei die erste Transaktionsstatusinformation von der Art der ersten Transaktion abhängt.

3. Verfahren nach Anspruch 2, **dadurch gekennzeichnet dass** wenigstens die ersten Zustandsinformationen oder wenigstens die zweiten Zustandsinformationen in Abhängigkeit von der ersten Transaktionsstatusinformation gesetzt werden.

4. Verfahren nach Anspruch 3, **dadurch gekennzeichnet dass** die erste Transaktionsstatusinformation in der zweiten Datenverarbeitungseinheit (2) gespeichert wird und wenigstens die zweiten Zustandsinformationen in Abhängigkeit von der ersten Transaktionsstatusinformation gesetzt werden.

5. Verfahren nach einem der vorhergehenden Ansprüche **dadurch gekennzeichnet dass** für den Fall eines erfolgiosen Abschlusses der ersten Transaktion zur späteren Wiederherstellung der Übereinstimmung zwischen den ersten Zustandsinformationen und den zweiten Zustandsinformationen wenigstens eine defensive Wiederherstellungsstrategie und eine progressive Wiederhersteliungsstrategie vorgesehen ist wobei die Wiederherstellungsstrategie in Abhängigkeit von der Art der ersten Transaktion ausgewählt wird und
- bei einer von der ersten Datenverarbeitungseinheit (1 ; ausgehenden Wiederherstellung der Übereinstimmung
- die ersten Zustandsinformationen bei der defensiven Wiederherstellungsstrategie unverändert gesetzt werden sowie
- die ersten Zustandsinformationen bei der progressiven Wiederherstellungsstrategie wie beim erfolgreichen Abschluss der ersten Transaktion gesetzt werden oder
- bei einer von der zweiten Datenverarbeitungseinheit (2) ausgehenden Wiederherstellung der Übereinstimmung
- die zweiten Zustandsinformationen bei der defensiven Wiederherstellungsstrategie unverändert gesetzt werden sowie
- die zweiten Zustandsinformationen bei der progressiven Wiederherstellungsstrategie wie beim erfolgreichen Abschluss der ersten Transaktion gesetzt werden.

6. Verfahren nach einem der vorhergehenden Ansprüche **dadurch gekennzeichnet. dass** im Rahmen einer der ersten Transaktion nachfolgenden zweiten Transaktion die ersten Zustandsinformationen und die zweiten Zustandsinformationen verglichen und im Falle einer Inkonsistenz zur Wiederherstellung der Übereinstimmung zwischen den ersten Zustandsinformationen und den zweiten Zustandsinformationen synchronisiert werden wobei die Synchronisation der ersten Zustandsinformationen und der zweiten Zustandsinformationen in Abhängigkeit von der Art der ersten Transaktion erfolgt.

7. Verfahren nach Anspruch 6, **dadurch gekennzeichnet dass** bei erfolglosem Abschluss der ersten Transaktion eine von der Art der ersten Transaktion abhängige erste Transaktionsstatusinformation generiert und gespeichert wird und die Synchronisation der ersten Zustandsinformationen und der zweiten Zustandsinformationen in Abhangigkeit von der ersten Transaktionsstatusinformation erfolgt.

8. Verfahren nach Anspruch 7, **dadurch gekennzeichnet dass** die erste Transaktionsstatusinformation in der zweiten Datenverarbeitungseinheit (2; gespelchert wird und die Synchronisation von der zweiten Datenverarbeitungseinheit (2) ausgeht.

9. Verfahren nach einem der Ansprüche 6 bis 8, **dadurch gekennzeichnet dass** für den Fall eines erfolglosen Abschlusses der ersten Transaktion wenigstens eine defensive Wiederherstellungsstrategie und eine progressive Wiederherstellungsstrategie vorgesehen ist. wobei die Wiederherstellungsstrategie in Abhängigkeit von der Art der ersten Transaktion ausgewählt wird, und
- bei einer von der ersten Datenverarbeitungseinheit (1) ausgehenden Synchronisation
- die ersten Zustandsinformationen bei der defensiven Wiederherstellungsstrategie so gesetzt werden dass sie den zweiten Zustandsinformationen entsprechen sowie
- die zweiten Zustandsinformationen bei der progressiven Wiederherstellungsstrategie so gesetzt werden, dass sie den ersten Zustandsinformationen entsprechen, oder
- bei einer von der zweiten Datenverarbeitungseinheit (2) ausgehenden Synchronisation
- die zweiten Zustandsinformationen bei der defensiven Wiederherstellungsstrategie so gesetzt werden. dass sie den ersten Zustandsinformationen entsprechen, sowie
- die ersten Zustandsinformationen bei der progressiven Wiederherstellungsstrategie so gesetzt werden dass sie den zweiten Zustandsinformationen entsprechen.

10. Verfahren nach Anspruch 9, **dadurch gekennzeichnet dass** bei erfolglosem Abschluss der ersten Transaktion eine von der Art der ersten Transaktion abhängige erste Transaktionsstatusinformation generiert und gespeichert wird und die Wiederherstellungsstrategie in Abhängigkeit von der ersten Transaktionsstatusinformation ausgewählt wird.

11. Verfahren nach Anspruch 10, **dadurch gekennzeichnet dass** die erste Transaktionsstatusinformation in der zweiten Datenverarbeitungseinheit (2) gespeichert wird und die Synchronisation von der zweiten Datenverarbeitungseinheit (2) ausgeht.

12. Verfahren nach einem der Ansprüche 6 bis 11, **dadurch gekennzeichnet dass** ein Zustandsmodell vorgesehen ist welches sämtliche möglichen Änderungen der Zustandsinformationen zur ersten Datenverarbeitungseinheit (2) erfasst und bei der Synchronisation eine Integritätsprüfung erfolgt die anhand des Zustandsmodells überprüft ob ein Übergang zwischen den ersten Zustandsinformationen und den zweiten Zustandsinformationen möglich **ist.** wobei die Synchronisation
- bei Feststellen eines möglichen Überganges zwischen den ersten Zustandsinformationen und den zweiten Zustandsinformationen durchgeführt wird und
- bei Feststellen keines möglichen Überganges zwischen den ersten Zustandsinformationen und den zweiten Zustandsinformationen abgebrochen wird.

13. Verfahren nach einem der vorhergehenden Ansprüche **dadurch gekennzeichnet, dass** die zweite Datenverarbeitungseinheit eine von der ersten Datenverarbeitungseinheit (1) entfernte Datenzentrale (2) ist.

14. Verfahren nach Anspruch 13, **dadurch gekennzeichnet dass** die erste Datenverarbeitungseinheit das Sicherheitsmodul (1) einer Frankiermaschine (4) ist.

15. Anordnung aus einer ersten Datenverarbeitungseinheit (1) und einer mit der ersten Datenverarbeitungseinheit (1) über eine Kommunikationsverbindung (3) verbindbaren zweiten Datenverarbeitungseinheit (2) wobei
- die erste Datenverarbeitungseinheit (1) eine Anzahl von Betriebszuständen sowie einen ersten Speicher (1.2) zum Speichern von den jeweiligen Betriebszustand der ersten Datenverarbeitungseinheit (1) definierenden ersten Zustandsinformationen aufweist und
- die zweite Datenverarbeitungseinheit (2) einen zweiten Speicher (2.2) zum Speichern von Betriebszustände der ersten Datenverarbeitungseinheit (1) repräsentierenden zweiten Zustandsinformationen aufweist.
- die erste Datenverarbeitungseinheit (1) und die zweite Datenverarbeitungseinheit (2) zur Durchführung von Transaktionen unter Austausch von Daten zwischen der ersten Datenverarbeitungseinheit (1) und der zweiten Datenverarbeitungseinheit (2, ausgebildet sind.
- die Transaktionen zustandsändernde Transaktionen umfassen.
- die erste Datenverarbeitungseinheit (1) und die zweite Datenverarbeitungseinheit (2) zur miteinander konsistenten Veränderung der ersten Zustandsinformationen und der zweiten Zustandsinformationen bei erfolgreichem Abschluss einer zustandsändernden Transaktion ausgebildet sind und
- die erste Datenverarbeitungseinheit (1) und die zweite Datenverarbeitungseinheit (2) zur Durchführung von wenigstens zwei unterschiedliche Arten von zustandsändernden Transaktionen ausgebildet sind
**dadurch gekennzeichnet, dass**
- die erste Datenverarbeitungseinheit (1) zurr Verändern der ersten Zustandsinformationen ausgelöst durch eine im Rahmen der ersten Transaktion empfangene Anderungsnachricht der zweiten Datenverarbeitungseinheit (2) ausgebildet ist.
- die zweite Datenverarbeitungseinneit (2) zum Verändern der zweiten Zustandsinformationen ausgelöst durch eine empfangene die Veränderung der ersten Zustandsinformationen bestätigende Bestätigungsnachricht der ersten Datenverarbeitungseinheit (1) ausgebildet ist, und
- die zweite Datenverarbeitungseinheit (2) zum Setzen der zweiten Zustandsinformationen in Abhängigkeit von der Art der ersten Transaktion bei erfolglosem Abschluss einer ersten Transaktion infolge des Ausbleibens einer fehlerfreien Bestätigungsnachricht ausgebildet ist,
- wobei für eine der unterschiedlichen Arten von zustandsändernden Transaktionen bei erfolglosern Abschluss der ersten Transaktion die zweiten Zustandsinformationen so gesetzt werden als wäre die erste Transaktion erfolgreich abgeschlossen.

16. Anordnung nach Anspruch 15, **dadurch gekennzeichnet dass**
- die erste Datenverarbeitungseinheit (1) zum Generieren und Speichern einer ersten Transaktionsstatusinformation bei erfolglosem Abschluss der ersten Transaktion ausgebildet ist
oder
- die zweite Datenverarbeitungseinheit (2) zum Generieren und Speichern einer ersten Transaktionsstatusinformation bei erfolglosem Abschluss der ersten Transaktion ausgebildet ist.
wobei die erste Transaktionsstatusinformation von der Art der ersten Transaktion abhängt

17. Anordnung nach Anspruch 16, **dadurch gekennzeichnet dass** die erste Datenverarbeitungseinheit (1) zum Speichern der ersten Transaktionsstatusinformation und zum Setzen der ersten Zustandsinformationen in Abhängigkeit von der ersten Transaktionsstatusinformation ausgebildet ist.

18. Anordnung nach Anspruch 16, **dadurch gekennzeichnet, dass** die zweite Datenverarbeitungseinheit (2) zum Speichern der ersten Transaktionsstatusinformation und zum Setzen der zweiten Zustandsinformationen in Abhängigkeit von der ersten Transaktionsstatusinformation ausgebildet ist.

19. Anordnung nach einem der Ansprüche 15 bis 18, **dadurch gekennzeichnet dass** die erste Datenverarbeitungseinheit (1)
- zur späteren Wiederherstellung de- Übereinstimmung zwischen den ersten Zustandsinformationen und der zweiten Zustandsinformationen nach erfolglosem Abschnluss de ersten Transaktion wenigstens einer defensiven Wiederherstellungsmodus und einen progressiven Wiederherstellungsmodus aufweist.
- zur Auswahl des Wiederherstellungsmodus in Abhängigkeit von der Art der ersten Transaktion ausgebildet ist.
- zum Unverändert-Setzen der ersten Zustandsinformationen im defensiven Wiederherstellungsmodus ausgebildet ist sowie
- zum Setzen der ersten Zustandsinformationen wie beim erfolgreichen Abschluss der ersten Transaktion im progressiven Wiederherstellungsmodus ausgebildet ist.

20. Anordnung nach einem der Ansprüche 15 bis 18, **dadurch gekennzeichnet dass** die zweite Datenverarbeitungseinheit (2)
- zur späteren Wiederherstellung der Übereinstimmung zwischen den ersten Zustandsinformationen und den zweiten Zustandsinformationen nach erfolglosem Abschluss der ersten Transaktion wenigstens einen defensiven Wiederherstellungsmodus und einen progressiven Wiederherstellungsmodus aufweist.
- zur Auswahl des Wiederherstellungsmodus in Abhängigkeit von der Art der ersten Transaktion ausgebildet ist.
- zum Unverändert-Setzen der zweiten Zustandsinformationen im defensiven Wiederherstellungsmodus ausgebildet ist sowie
- zum Setzen der zweiten Zustandsinformationen wie beim erfolgreichen Abschluss der ersten Transaktion im progressiven Wiederherstellungsmodus ausgebildet ist.

21. Anordnung nach einem der Ansprüche 15 bis 20, dadurch gekenntzeichnet dass
- die erste Datenverarbeitungseinheit (1) und die zweite Datenverarbeitungseinheit (2) zur Durchführung einer der ersten Transaktion nachfolgenden zweiten Transaktion ausgebildet sind.
- die erste Datenverarbeitungseinheit (1) und/oder die zweite Datenverarbeitungseinheit (2) zum Vergleichen der ersten Zustandsinformationen und der zweiten Zustandsinformationen im Rahmen der zweiten Transaktion ausgebildet ist.
- die erste Datenverarbeitungseinheit (1) und die zweite Datenverarbeitungseinheit (2) zur Wiederherstellung der Übereinstimmung zwischen den ersten Zustandsinformationen und den zweiten Zustandsinformationen im Falle einer Inkonsistenz mittels Synchronisation ausgebildet sind.
- die erste Datenverarbeitungseinheit (1) und die zweite Datenverarbeitungseinheit (2) zur Durchführung der Synchronisation der ersten Zustandsinformationen und der zweiten Zustandsinformationen in Abhängigkeit von der Art der ersten Transaktion ausgebildet sind.

22. Anordnung nach Anspruch 21, **dadurch gekennzeichnet. dass**
- die erste Datenverarbeitungseinheit (1) und/oder die zweite Datenverarbeitungseinheit (2) zum Generieren und Speichern einer von der Art der ersten Transaktion abhängigen ersten Transaktionsstatusinformation bei erfofglosem Abschluss der ersten Transaktion ausgebildet ist und
- die erste Datenverarbeitungseinheit (1) und die zweite Datenverarbeitungseinheit (2) zur Synchronisation der ersten Zustandsinformationen und der zweiten Zustandsinformationen in Abhängigkeit von der ersten Transaktionsstatusinformation ausgebildet sind.

23. Anordnung nach Anspruch 22, **dadurch gekennzeichnet dass** die zweite Datenverarbeitungseinheit (2) zum Speichern der ersten
Transaktionsstatusinformation und zum Initiieren der Synchronisation ausgebildet ist.

24. Anordnung nach einem der Ansprüche 21 bis 23, dadurch gekenntzeichnet. dass die erste Datenverarbeitungseinheit (1)
- wenigstens einen defensiven Wiederherstellungsmodus und einen progressiven Wiederherstellungsmodus aufweist
- zur Auswahl des Wiederherstellungsmodus in Abhängigkeit von der An der ersten Transaktion und zum Initiieren den Synchronisation ausgebildet ist und
die erste Datenverarbeitungseinheit (1) und die zweite Datenverarbeitungseinheit (2) sc ausgebildet sind dass
- die ersten Zustandsinformationen im defensiven Wiederherstellungsmodus so gesetzt werden dass sie den zweiten Zustandsinformationen entsprechen und
- die zweiten Zustandsinformationen im progressiven Wiederherstellungsmodus so gesetzt werden dass sie den ersten Zustandsinformationen entsprechen.

25. Anordnung nach Anspruch 24, **dadurch gekennzeichnet dass** die erste Datenverarbeitungseinheit (1) zum Generieren und Speichern einer von der Art der ersten Transaktion abhängigen ersten Transaktionsstatusinformation bei erfolglosem Abschiuss der ersten Transaktion und zur Auswahl des Wiederherstellungsmodus in Abhängigkeit von der ersten Transaktionsstatusinformation ausgebildet ist.

26. Anordnung nach einem der Ansprüche 21 bis 25, **dadurch gekennzeichnet dass** die zweite Datenverarbeitungseinheit (2)
- wenigstens einen defensiven Wiederherstellungsmodus und einen progressiven Wiederherstellungsmodus aufweist sowie
- zur Auswahl des Wiederherstellungsmodus in Abhängigkeit von der Art der ersten Transaktion und zum Initiieren der Synchronisation ausgebildet ist und
die erste Datenverarbeitungseinheit (1) und die zweite Datenverarbeitungseinheit (2) so ausgebildet sind dass
- die zweiten Zustandsinformationen im defensiven Wiederherstellungsmodus so gesetzt werden dass sie den ersten Zustandsinformationen entsprechen. und
- die ersten Zustandsinformationen im progressiven Wiederherstellungsmodus so gesetzt werden. dass sie den zweiten Zustandsinformationen entsprechen.

27. Anordnung nach Anspruch 26, **dadurch gekennzeichnet, dass** die zweite Datenverarbeitungseinheit (2) zum Generieren und Speichern einer von der Art der ersten Transaktion abhängigen ersten Transaktionsstatusinformation bei erfolglosem Abschluss der ersten Transaktion und zur Auswahl des Wiederherstellungsmodus in Abhängigkeit von der ersten Transaktionsstatusinformation ausgebildet ist.

28. Anordnung nach einem der Ansprüche 21 bis 27, **dadurch gekennzeichnet, dass**
- in der ersten Datenverarbeitungseinheit (1) und/oder in der zweiten Datenverarbeitungseinheit (2) ein Zustandmodell gespeichert ist. in dem sämtliche möglichen Änderungen der Zustandsinformationen zur ersten Datenverarbeitungseinheit (1) erfasst sind,
- die erste Datenverarbeitungseinheit (1) und/oder die zweite Datenverarbeitungseinheit (2) zur Durchführung einer Integritätsprüfung bei der Synchronisation derart ausgebildet ist, dass anhand des Zustandsmodells überprüft wird. ob ein Übergang zwischen den ersten Zustandsinformationen und den zweiten Zustandsinformationen möglich ist und
- die erste Datenverarbeitungseinheit (1) und/oder die zweite Datenverarbeitungseinheit (2) derart ausgebildet ist dass die Synchronisation
- bei Feststellen eines möglichen Überganges zwischen den ersten Zustandsinformationen und den zweiten Zustandsinformationen durchgeführt wird und
- bei Feststellen keines möglichen Überganges zwischen den ersten Zustandsinformationen und den zweiten Zustandsinformationen abgebrochen wird.

29. Anordnung nach einem der Ansprüche 15 bis 28, **dadurch gekennzeichnet dass**
- die erste Datenverarbeitungseinheit (1) eine mit dem ersten Speicher (1.2) verbundene erste Verarbeitungseinrichtung (1.1) umfasst und eine mit der ersten Verarbeitungseinrichtung (1.1) verbundene erste Kommunikationseinrichtung (8) zum Datenaustausch mit der zweiten Datenverarbeitungseinheit (2) vorgesehen ist und
- die zweite Datenverarbeitungseinheit (2) eine mit dem zweiten Speicher (2.2) verbundene zweite Verarbeitungseinrichtung (2.1) und eine mit der zweiten Verarbeitungseinrichtung (2.1) verbundene zweite Kommunikationseinrichtung (9) zum Datenaustausch mit der ersten Datenverarbeitungseinheit (1) aufweist

30. Anordnung nach einem der Ansprüche 15 bis 29, **dadurch gekennzeichnet dass** die zweite Datenverarbeitungseinheit eine von der ersten Datenverarbeitungseinheit (1) entfernte Datenzentrale (2) is:

31. Anordnung nach Anspruch 30, **dadurch gekennzeichnet dass** die erste Datenverarbeitungseinheit das Sicherheitsmodul (1) einer Frankiermaschine (4) ist.

## Claims

1. Method for exchanging data between a first data processing unit (1) containing first status information about said first data processing unit and a second data processing unit (2) containing second status information about said first data processing unit, wherein
- data are exchanged between said first data processing unit (1) and said second data processing unit (2) in the course of transactions,
- said transactions include status-changing transactions, upon successful completion of which said first status information and said second status information are modified mutually consistently, and
- at least two status-changing transactions of different type are provided,
**characterized in that**
- a first status-changing transaction is executed and upon an unsuccessful completion of said first status-changing transaction, said second status information is set dependent on the type of said status-changing transaction, wherein
- said first status information is modified in a manner triggered by a modification message of said second data processing unit (2) received at said first data processing unit (1),
- said second status information is modified in a manner triggered by a confirmation message of said first data processing unit (1) received at said second data processing unit (1), said confirmation message confirming said modification of said first status information, and,
- for one of said status-changing transactions, upon unsuccessful completion of said first transaction due to missing receipt of a flawless confirmation message, said second status information, as a function of said type of said first transaction, is set by said second data processing unit (2) as if said first transaction was successfully completed.

2. Method according to claim 1, **characterized in that**, upon unsuccessful completion of said first transaction, a first transaction status information is generated, which is stored in said first data processing unit (1) or said second data processing unit (2), wherein said first transaction status information depends on the type of said first transaction.

3. Method according to claim 2, **characterized in that** at least said first status information or at least said second status information is set as a function of said first transaction status information.

4. Method according to claim 3, **characterized in that** said transaction status information is stored in said second data processing unit (2) and at least said second status information is set dependent on said first transaction status information.

5. Method according to any one of the preceding claims, **characterized in that**, for later reestablishing conformity between said first status information and said second status information after the unsuccessful completion of said status-changing transaction, at least a defensive recovery strategy and a progressive recovery strategy are provided to said first and second data processing units, wherein said recovery strategy is selected dependent on the type of said first transaction, and,
- if said reestablishing of the conformity is initiated by said first data processing unit (1),
- with said defensive recovery strategy, said first status information is set in an unchanged fashion, and,
- with said progressive recovery strategy, said first status information is set as if said first transaction were successfully completed, and,
- if said reestablishing of the conformity is initiated by said second data processing unit (2),
- with said defensive recovery strategy, said second status information is set in an unchanged fashion, and,
- with said progressive recovery strategy, said second status information is set as if said status-changing transaction were successfully completed.

6. Method according to any one of the preceding claims, **characterized in that**, in the course of a second transaction following said first transaction, said first status information and said second status information are compared and, if an inconsistency exists, are synchronized for reestablishing conformity between said first status information and said second status information, wherein synchronization of said first status information and said second status information ensues dependent on the type of said first transaction.

7. Method according to claim 6, **characterized in that**, if said first transaction is not successfully completed, a first transaction status information that depends on the type of said first status-changing transaction is generated and stored, and synchronizing said first status information and said second status information ensues dependent on said first transaction status information.

8. Method according to claim 7, **characterized in that** said first transaction status information is stored in said second data processing unit (2) and said synchronization is initiated from said second data processing unit (2).

9. Method according to any one of claims 6 to 8, **characterized in that**, for the case of an unsuccessful completion of said first transaction, a defensive recovery strategy and a progressive recovery strategy are provided, wherein said recovery strategy is selected dependent on the type of said first transaction, and,
- if said synchronization is initiated by said first data processing unit (1),
- with said defensive recovery strategy, said first status information is set such that it corresponds to said second status information, and,
- with said progressive recovery strategy, said second status information is set such that it corresponds to said first status information, and,
- if said synchronization is initiated by said second data processing unit (2),
- with said defensive recovery strategy, said second status information is set such that it corresponds to said first status information, and,
- with said progressive recovery strategy, said first status information is set such that it corresponds to said second status information.

10. Method according to claim 9, **characterized in that**, if said first transaction is not successfully completed, a first transaction status information that depends on the type of said first transaction, is generated and stored, and said recovery strategy is selected dependent on said first transaction status information.

11. Method according to claim 10, **characterized in that**,said first transaction status information is stored in said second data processing unit (2) and that synchronization is initiated by said second data processing unit (2).

12. Method according to any one of claims 6 to 11, **characterized in that** a status model is provided that covers all possible modifications of said first status information about said first data processing unit (2), and during said synchronization an integrity check is conducted using said status model for determining whether achieving conformity between said first status information and said second status information is possible, wherein said synchronization
- is continued, if it is determined that achieving conformity between said first status information and said second status information is possible, and
- is interrupted, if it is determined that achieving conformity between said first status information and said second status information is not possible.

13. Method according to any one of the preceding claims, **characterized in that** the second data processing unit is data center (2) located remotely from said first data processing unit (1).

14. Method according to claim 13, **characterized in that** said first data processing unit (1) is a security module of a postage metering machine (4).

15. Arrangement comprising a first data processing unit (1) and a second data processing unit (2) connectable to said first data processing unit (1) via a communication link (4), wherein
- said first data processing unit (1) has a plurality operating states and comprises a first memory (1.2) for storing first status information defining an operating state of said first data processing unit (1),
- said second data processing unit (2) comprises a second memory (2.2) for storing second status information representing operating states of said first data processing unit (1),
- said first data processing unit (1) and said second data processing unit (2) are configured to conduct transactions by exchanging data between said first data processing unit (1) and said second data processing unit (2)
- said transactions include status-changing transactions,
- said first data processing unit (1) and said second data processing unit (2) are configured for mutually consistent modification of said first status information and said second status information if said status-changing transaction is successfully completed; and
- said first data processing unit (1) and said second data processing unit (2) are configured to execute at least two different types of status-changing transactions;
**characterized in that**
- said first data processing unit (1) is configured to modify said first status information in a manner triggered by a modification message of said second data processing unit (2) received in the course of said first transaction,
- said second data processing unit (2) is configured to modify said second status information in a manner triggered by a received confirmation message of said first data processing unit (1) confirming said modification of said first status information, and,
- said second data processing unit (2) is configured to set, upon unsuccessful completion of said first transaction due to missing receipt of a flawless confirmation message, said second status information as a function of said type of said first transaction, wherein, for one of said different types of said status-changing transactions, upon unsuccessful completion of said first transaction, said second status information is set as if said first transaction was successfully completed.

16. Arrangement according to claim 15, **characterized in that**
- said first data processing unit (1) is configured to generate and store a first transaction status information upon unsuccessful completion of said first transaction
or
- said second data processing unit (2) is configured to generate and store a first transaction status information upon unsuccessful completion of said first transaction
wherein said first transaction status information depends on the type of said first transaction.

17. Arrangement according to claim 16, **characterized in that** said first data processing unit (1) is configured to store said first transaction status information and to set said first status information as a function of said first transaction status information.

18. Arrangement according to claim 16, **characterized in that** said second data processing unit (2) is configured to store said first transaction status information and to set said second status information as a function of said first transaction status information.

19. Arrangement according to one of claims 15 to 18, **characterized in that** said first data processing unit (1)
- for later reestablishing conformity between said first status information and said second status information after the unsuccessful completion of said status-changing transaction, has at least a defensive recovery mode and a progressive recovery mode
- is configured to select said recovery mode dependent on the type of said first transaction, and,
- is configured to set said first status information in an unchanged fashion in said defensive recovery mode
- is configured to set said first status information as if said first transaction were successfully completed in said progressive recovery mode.

20. Arrangement according to one of claims 15 to 18, **characterized in that** said second data processing unit (2)
- for later reestablishing conformity between said first status information and said second status information after the unsuccessful completion of said status-changing transaction, has at least a defensive recovery mode and a progressive recovery mode
- is configured to select said recovery mode dependent on the type of said first transaction, and,
- is configured to set said first status information in an unchanged fashion in said defensive recovery mode
- is configured to set said first status information as if said first transaction were successfully completed in said progressive recovery mode.

21. Arrangement according to one of claims 15 to 20, **characterized in that**
- said first data processing unit (1) and said second data processing unit (2) are configured to conduct a second transaction following said first transaction;
- said first data processing unit (1) and/or said second data processing unit (2) is configured to compare said first status information and said second status information during said second transaction;
- said first data processing unit (1) and said second data processing unit (2) are configured to reestablish conformity between said first status information and said second status information by a synchronization if an inconsistency exists between said first and second status information; and
- said first data processing unit (1) and said second data processing unit (2) are configured to conduct said synchronization of said first status information and said second status information dependent on the type of said first transaction.

22. Arrangement according to claim 23, **characterized in that**
- said first data processing unit (1) and/or said second data processing unit (2) is configured to generate and store first transaction status information depending on the type of said first transaction, if said first status-changing transaction is not successfully completed, and
- said first data processing unit (1) and said second data processing unit (2) are configured to synchronize said first status information and said second status information dependent on said first transaction status information.

23. Arrangement according to claim 24, wherein said second data processing unit (2) is configured to store said first transaction status information and initiate said synchronization.

24. Arrangement according to one of claims 21 to 23, **characterized in that** said first data processing unit (1)
- has a defensive recovery mode and a progressive recovery mode
- is configured to select said recovery mode dependent on the type of said first transaction and to initiate said synchronization; and
said first data processing unit (1) and/or said second data processing unit (2) is configured to,
- set, in said defensive recovery mode, said first status information to match said second status information and
- set, in said progressive recovery mode, said second status information to match said first status information.

25. Arrangement according to claim 24, **characterized in that** said first data processing unit (1) is configured to generate and store first transaction status information if said first status-changing transaction is not successfully completed, said first transaction status information depending on the type of said first status-changing transaction, and wherein said first data processing unit (1) is configured to select said recovery mode dependent on said first transaction status information.

26. Arrangement according to one of claims 21 to 23, **characterized in that** said second data processing unit (2)
- has a defensive recovery mode and a progressive recovery mode, and
- is configured to select said recovery mode dependent on the type of said first status-changing transaction and to initiate said synchronization, and
wherein said first data processing unit (1) and/or said second data processing unit (2) is configured to
- set, in said defensive recovery mode, said second status information to match said first status information and,
- set, in said progressive recovery mode, said first status information to match said second status information.

27. Arrangement according to claim 26, **characterized in that**, said second data processing unit (2) is configured to generate and store first transaction status information if said first status-changing transaction is not successfully completed, said first transaction status information depending on the type of said first status-changing transaction, and is configured to select said recovery mode dependent on said first transaction status information.

28. Arrangement according to one of claims 23, comprising:
- a status model is stored by said first data processing unit (1) and/or said second data processing unit (2), said status model covering all possible modifications of said first status information about said first data processing unit (1);
- said first data processing unit (1) and/or said second data processing unit (2) is configured to conduct an integrity check during said synchronization to determine whether conformity between said first status information and said second status information is possible to achieve based on said status model; and
- said first data processing unit (1) and/or said second data processing unit (2) is configured to
o conduct said synchronization if it is determined that conformity between said first status information and said second status information is possible to achieve and
o to interrupt said synchronization if it is determined that conformity between said first status information and said second status information is not possible to achieve.

29. Arrangement according to one of claims 16 to 28, **characterized in that**,
- said first data processing unit (1) comprises a first memory (1.2), containing said first status information, connected to said first processor (1.1), and a first communication device (8) connected to said first processor (1,1); and
- said second data processing unit (2) comprises a second memory (2.2), containing said second status information, connected to said second processor (2.1), and a second communication device (9) connected to said second processor (2.1) for exchanging data with said first data processing unit (1).

30. Arrangement according to one of claims 15 to 29, wherein said second data processing unit (2) is a data center located remotely from said first data processing unit (1).

31. Arrangement according to claim 30, wherein said first data processing unit (1) is a security module of a postage metering machine (4).

## Revendications

1. Procédé d'échange de données entre une première unité de traitement de données (1), qui contient des premières informations d'état concernant la première unité de traitement de données (1), et une deuxième unité de traitement de données (2), qui contient des deuxièmes informations d'état concernant la première unité de traitement de données (1), lors duquel
- des données sont échangées dans le cadre de transactions entre la première unité de traitement de données (1) et la deuxième unité de traitement de données (2) ;
- les transactions comprennent des transactions modifiant l'état, à l'issue positive desquelles les premières informations d'état et les deuxièmes informations d'état sont modifiées de manière à concorder, et
- au moins deux types différents de transactions modifiant l'état sont prévus,
**caractérisé en ce que**
- une première transaction modifiant l'état est exécutée, et en cas d'issue négative de cette première transaction, les deuxièmes informations d'état sont établies en fonction du type de la première transaction, étant précisé que
- la modification des premières informations d'état est déclenchée par un message de modification de la deuxième unité de traitement de données (2) reçu par la première unité de traitement de données (1);
- la modification des deuxièmes informations d'état est déclenchée par un message de confirmation de la première unité de traitement de données (1) reçu par la deuxième unité de traitement de données (1), état précisé que le message de confirmation confirme la modification des premières informations d'état, et
- pour l'un des différents types de transactions modifiant l'état, en cas d'issue négative de la première transaction suite à l'absence d'un message de confirmation sans erreur, les deuxièmes informations d'état sont établies par la deuxième unité de traitement de données (2), en fonction du type de la première transaction, comme si la première transaction avait réussi.

2. Procédé selon la revendication 1, **caractérisé en ce qu'**en cas d'issue negative de la première transaction, une première information sur le statut de la transaction est généré, qui est enregistrée dans la première unité de traitement de données (1) ou la deuxième unité de traitement de données (2), étant précisé que la première information sur le statut de la transaction dépend du type de la première transaction.

3. Procédé selon la revendication 2, **caractérisé en ce qu'**au moins la première information d'état ou au moins la deuxième information d'état est établie en fonction de la première information sur le statut de la transaction.

4. Procédé selon la revendication 3, **caractérisé en ce qu'**au moins la première information sur le statut de la transaction est enregistrée dans la deuxième unité de traitement de données (2) et au moins la deuxième information d'état est établie en fonction de la première information sur le statut de la transaction.

5. Procédé selon l'une des revendications précédentes, **caractérisé en ce que**, pour le rétablissement postérieur de la concordance entre les premières et les deuxièmes informations d'état en cas d'issue negative de la première transaction, il est prévu au moins une stratégie de rétablissement défensive et une stratégie de rétablissement progressive, étant précisé que la stratégie de rétablissement est sélectionnée en fonction du type de la première transaction, et
- lors d'un rétablissement de la concordance émanant de la première unité de traitement de données (1)
- dans la stratégie de rétablissement défensive, les premières informations d'état sont établies sans modification, et
- dans la stratégie de rétablissement progressive, les deuxièmes informations d'état sont établies comme lors de la réussite de la première transaction, ou
- lors d'un rétablissement de la concordance émanant de la deuxième unité de traitement de données (2)
- dans la stratégie de rétablissement défensive, les deuxièmes informations d'état sont établies sans modification, et
- dans la stratégie de rétablissement progressive, les deuxièmes informations d'état sont établies comme lors de la réussite de la première transaction.

6. Procédé selon l'une des revendications précédentes, **caractérisé en ce que** dans le cadre d'une deuxième transaction consécutive à la première transaction, les premières informations d'état et les deuxièmes informations d'état sont comparées, et, dans le cas d'une incohérence, sont synchronisées aux fins du rétablissement de la concordance entre les premières informations d'état et les deuxièmes informations d'état, étant précisé que la synchronisation des premières informations d'état et des deuxièmes informations d'état s'effectue en fonction du type de la première transaction.

7. Procédé selon la revendication 6, **caractérisé en ce qu'**en cas d'issue negative de la première transaction, une première information sur le statut de la transaction en fonction du type de la première transaction est générée et enregistrée, et la synchronisation de la première information d'état et de la deuxième information d'état s'effectue en fonction de la première information sur le statut de la transaction.

8. Procédé selon la revendication 7, **caractérisé en ce que** la première information sur le statut de la transaction est enregistrée dans la deuxième unité de traitement de données (2) et la synchronisation s'effectue à partir de la deuxième unité de traitement de données (2).

9. Procédé selon l'une des revendications 6 à 8, **caractérisé en ce qu'**en cas d'issue negative de la première transaction, il est prévu au moins une stratégie de rétablissement défensive et une stratégie de rétablissement progressive, étant précisé que la stratégie de rétablissement est sélectionnée en fonction du type de la première transaction, et
- lors d'un rétablissement de la concordance émanant de la première unité de traitement de données (1)
- dans la stratégie de rétablissement défensive, les premières informations d'état sont établies de manière à ce qu'elles correspondent aux deuxièmes informations d'état, et
- dans la stratégie de rétablissement progressive, les deuxièmes informations d'état sont établies de manière à ce qu'elles correspondent aux premières informations d'état, ou
- lors d'un rétablissement de la concordance émanant de la deuxième unité de traitement de données (2)
- dans la stratégie de rétablissement défensive, les deuxièmes informations d'état sont établies de manière à ce qu'elles correspondent aux premières informations d'état, et
- dans la stratégie de rétablissement progressive, les premières informations d'état sont établies de manière à ce qu'elles correspondent aux deuxièmes informations d'état.

10. Procédé selon la revendication 9, **caractérisé en ce qu'**en cas d'issue negative de la première transaction, une première information sur le statut de la transaction en fonction du type de la première transaction est générée et enregistrée, et la stratégie de rétablissement est sélectionnée en fonction de la première information sur le statut de la transaction.

11. Procédé selon la revendication 10, **caractérisé en ce que** la première information sur le statut de la transaction est enregistrée dans la deuxième unité de traitement de données (2) et la synchronisation s'effectue à partir de la deuxième unité de traitement de données (2).

12. Procédé selon l'une des revendications 6 à 11, **caractérisé en ce qu'**il est prévu un modèle d'état qui englobe l'ensemble des modifications possibles des informations d'état concernant la première unité de traitement de données (2), et lors de la synchronisation, un contrôle d'intégrité vérifie, à l'aide du modèle d'état, si une transition est possible entre les premières informations d'état et les deuxièmes informations d'état, étant précisé que la synchronisation
- s'effectue lorsqu'il est établi qu'une transition est possible entre les premières informations d'état et les deuxièmes informations d'état, et
- est interrompue lorsqu'il est établi qu'aucune transition n'est pas possible entre les premières informations d'état et les deuxièmes informations d'état.

13. Procédé selon l'une des revendications précédentes, **caractérisé en ce que** la deuxième unité de traitement de données est une centrale de données (2) distante de la première unité de traitement de données (1).

14. Procédé selon la revendication 13, **caractérisé en ce que** la première unité de traitement de données est le module de sécurité (1) d'une machine à affranchir (4).

15. Arrangement comprenant une première unité de traitement de données (1) et une deuxième unité de traitement de données (2) reliable à la première unité de traitement de données (1) par le biais d'une liaison de communication (3), étant précisé que
- La première unité de traitement de données (1) présente un certain nombre d'états de fonctionnement ainsi qu'une première mémoire (1.2) pour l'enregistrement des premières informations d'état définissant les états de fonctionnement respectifs de la première unité de traitement de données (1), et
- la deuxième unité de traitement de données (2) comporte une deuxième mémoire (2.2) pour l'enregistrement des deuxièmes informations d'état représentant les états de fonctionnement de la première unité de traitement de données (1).
- la première unité de traitement de données (1) et la deuxième unité de traitement de données (2) sont conçues pour l'exécution de transactions par l'échange des données entre la première unité de traitement de données (1) et la deuxième unité de traitement de données (2).
- les transactions comprennent des transactions modifiant l'état.
- la première unité de traitement de données (1) et la deuxième unité de traitement de données (2) sont conçues pour la modification en cohérence des premières d'informations d'état et des deuxièmes informations d'état lors de l'exécution réussie d'une transaction modifiant l'état, et
- la première unité de traitement de données (1) et la deuxième unité de traitement de données (2) sont conçues pour l'exécution d'au moins deux types différents de transactions modifiant l'état,
**caractérisé en ce que**
- la première unité de traitement de données (1) est conçue pour la modification des premières informations d'état provoquée par un message de modification de la deuxième unité de traitement de données (2) reçu dans le cadre de la première transaction ;
- la deuxième unité de traitement de données (2) est conçue pour la modification des deuxièmes informations d'état provoquée par un message de confirmation reçu de la première unité de traitement de données (1) confirmant la modification des premières informations d'état, et
- la deuxième unité de traitement de données (2) est conçue pour l'établissement des deuxièmes informations d'état en fonction du type de la première transaction en cas d'issue négative d'une première transaction suite à l'absence de message de confirmation sans erreur,
- étant précisé que pour l'un des différents types de transactions modifiant l'état, lors de l'échec de la première transaction, les deuxièmes informations d'état sont établies comme si la première transaction avait réussi.

16. Arrangement selon la revendication 15, **caractérisé en ce que**
- la première unité de traitement de données (1) est conçue pour générer et enregistrer une première information sur le statut de la transaction en cas d'issue négative de la première transaction
ou
- la deuxième unité de traitement de données (2) est conçue pour générer et enregistrer une première information sur le statut de la transaction en cas d'issue negative de la première transaction.
étant précisé que la première information sur le statut de la transaction dépend du type de la première transaction.

17. Arrangement selon la revendication 16, **caractérisé en ce que** la première unité de traitement de données (1) est conçue pour l'enregistrement de la première information sur le statut de la transaction et pour l'établissement des premières informations d'état en fonction de la première information sur le statut de la transaction.

18. Arrangement selon la revendication 16, **caractérisé en ce que** la deuxième unité de traitement de données (2) est conçue pour l'enregistrement de la première information sur le statut de la transaction et pour l'établissement des deuxièmes informations d'état en fonction de la première information sur le statut de la transaction.

19. Arrangement selon les revendications 15 à 18, caractérisé ce que la première unité de traitement de données (1)
- présente au moins un mode de rétablissement défensif et un mode de rétablissement progressif pour le rétablissement postérieur de la concordance entre les premières informations d'état et les deuxièmes informations d'état après l'échec de l'exécution de la première transaction ;
- est conçue pour la sélection du mode de rétablissement en fonction du type de la première transaction ;
- est conçue pour l'établissement sans modification des premières informations d'état dans le mode de rétablissement défensif, et
- est conçue pour l'établissement des premières informations d'état comme lors de la réussite de la première transaction dans le mode de rétablissement progressif.

20. Arrangement selon l'une des revendications 15 à 18, **caractérisé en ce que** la deuxième unité de traitement de données (2)
- présente au moins un mode de rétablissement défensif et un mode de rétablissement progressif pour le rétablissement postérieur de la concordance entre les premières et les deuxièmes informations d'état après l'échec de l'exécution de la première transaction ;
- est conçu pour la sélection du mode de rétablissement en fonction du type de la première transaction ;
- est conçu pour l'établissement sans modification des deuxièmes informations d'état dans le mode de rétablissement défensif, et
- est conçu pour l'établissement des deuxièmes informations d'état comme lors de la réussite de la première transaction dans le mode de rétablissement progressif.

21. Arrangement selon l'une des revendications 15 à 20, **caractérisé en ce que**
- la première unité de traitement de données (1) et la deuxième unité de traitement de données (2) sont conçues pour exécuter une deuxième transaction consécutive à la première transaction ;
- la première unité de traitement de données (1) et/ou la deuxième unité de traitement de données (2) sont conçues pour comparer les premières informations d'état et les deuxièmes informations d'état dans le cadre de la deuxième transaction.
- la première unité de traitement de données (1) et la deuxième unité de traitement de données (2) sont conçues pour rétablir la concordance, au moyen d'une synchronisation, entre les premières informations d'état et les deuxièmes informations d'état en cas d'incohérence.
- la première unité de traitement de données (1) et la deuxième unité de traitement de données (2) sont conçues pour effectuer la synchronisation des premières et des deuxièmes informations d'état en fonction du type de la première transaction.

22. Arrangement selon la revendication 21, **caractérisé en ce que**
- la première unité de traitement de données (1) et/ou la deuxième unité de traitement de données (2) sont conçues pour générer et enregistrer une première information sur le statut de la transaction en fonction du type de la première transaction, en cas d'issue negative de la première transaction, et
- la première unité de traitement de données (1) et la deuxième unité de traitement de données (2) sont conçues pour la synchronisation des premières informations d'état et des deuxièmes informations d'état en fonction de la première information sur le statut de la transaction.

23. Arrangement selon la revendication 22, **caractérisé en ce que** la deuxième unité de traitement de données (2) est conçue pour enregistrer la première information sur le statut de la transaction et pour lancer la synchronisation.

24. Arrangement selon l'une des revendications 21 à 23, **caractérisé en ce que** la première unité de traitement de données (1)
- présente au moins un mode de rétablissement défensif et un mode de rétablissement progressif
- est conçue pour sélectionner le mode de rétablissement en fonction du type de la première transaction et pour lancer la synchronisation, et
- la première unité de traitement de données (1) et la deuxième unité de traitement de données (2) sont conçues de telle sorte que
- dans le mode de rétablissement défensif, les premières informations d'état sont établies de manière à correspondre aux deuxièmes informations d'état, et
- dans le mode de rétablissement progressif, les deuxièmes informations d'état sont établies de manière à correspondre aux premières informations d'état.

25. Arrangement selon la revendication 24, **caractérisé en ce que** la première unité de traitement de données (1) est conçue pour générer et enregistrer une première information sur le statut de la transaction en fonction du type de la première transaction, en cas d'issue negative de la première transaction, et pour sélectionner le mode de rétablissement en fonction de la première information sur le statut de la transaction.

26. Arrangement selon l'une des revendications 21 à 25, **caractérisé en ce que** la deuxième unité de traitement de données (2)
- présente au moins un mode de rétablissement défensif et un mode de rétablissement progressif, et
- est conçue pour sélectionner le mode de rétablissement en fonction du type de la première transaction et pour lancer la synchronisation, et
- la première unité de traitement de données (1) et la deuxième unité de traitement de données (2) sont conçues de telle sorte que
- dans le mode de rétablissement défensif, les deuxièmes informations d'état sont établies de manière à correspondre aux premières informations d'état, et
- dans le mode de rétablissement progressif, les premières informations d'état sont établies de manière à correspondre aux deuxièmes informations d'état.

27. Arrangement selon la revendication 26, **caractérisé en ce que** la deuxième unité de traitement de données (2) est conçue pour générer et enregistrer une première information sur le statut de la transaction en fonction du type de la première transaction, en cas d'issue negative de la première transaction, et pour sélectionner le mode de rétablissement en fonction de la première information sur le statut de la transaction.

28. Arrangement selon l'une des revendications 21 à 27, **caractérisé en ce que** dans la première unité de traitement de données (1) et/ou dans la deuxième unité de traitement de données (2), un modèle d'état est enregistré, dans lequel l'ensemble des modifications possibles des informations d'état concernant la première unité de traitement de données (1) sont répertoriées,
- la première unité de traitement de données (1) et/ou la deuxième unité de traitement de données (2) sont conçues, aux fins de l'exécution d'un contrôle d'intégrité lors de la synchronisation, de manière à ce qu'il soit vérifié, à l'aide du modèle d'état, si une transition est possible entre les premières informations d'état et les deuxièmes informations d'état, et
- la première unité de traitement de données (1) et/ou la deuxième unité de traitement de données (2) sont conçues de telle sorte que la synchronisation
- est effectuée lorsqu'il est établi qu'une transition est possible entre les premières informations d'état et les deuxièmes informations d'état, et
- est interrompue lorsqu'il est établi qu'aucune transition n'est possible entre les premières informations d'état et les deuxièmes informations d'état.

29. Arrangement selon l'une des revendications 15 à 28, **caractérisé en ce que**
- la première unité de traitement de données (1) comprend un premier système de traitement (1.1) relié à la première mémoire (1.2), et il est prévu un premier système de communication (8) relié au premier système de traitement (1.1) pour l'échange de données avec la deuxième unité de traitement de données (2), et
- la deuxième unité de traitement de données (2) comprend un deuxième système de traitement (2.1) relié à la deuxième mémoire (2.2), et il est prévu un deuxième système de communication (9) relié au deuxième système de traitement (2.1) pour l'échange de données avec la première unité de traitement de données (1),

30. Arrangement selon l'une des revendications 15 à 29, **caractérisé en ce que** la deuxième unité de traitement des données est une centrale de données (2) distante de la première unité de traitement de données (1).

31. Arrangement selon la revendication 30, **caractérisé en ce que** la première unité de traitement de données est le module de sécurité (1) d'une machine à affranchir (4).
